# EUROPÄISCHE PATENTSCHRIFT

(11) **EP 1 202 834 B1**
(45) Veröffentlichungstag und Bekanntmachung des Hinweises auf die Patenterteilung: **18.12.2002**
(21) Anmeldenummer: 00947949.4
(22) Anmeldetag: 07.07.2000
(51) Int. Cl.: B23P 19/06, B21J 15/02, F16B 37/06, F16B 19/08

(54) **FUNKTIONSELEMENT, VERFAHREN ZUM EINBRINGEN DES FUNKTIONSELEMENTES IN EIN BLECHTEIL, ZUSAMMENBAUTEIL**
FUNCTIONAL ELEMENT, METHOD FOR FIXING IT IN A SHEET METAL PART, ASSEMBLING ELEMENT
ELEMENT FONCTIONNEL, PROCEDE POUR SA POSE DANS UNE PIECE DE TOLE, ELEMENT D'ASSEMBLAGE

(30) Priorität: 09.07.1999 DE 19932023; 30.07.1999 DE 19935923; 16.04.2000 DE 10018716
(43) Veröffentlichungstag der Anmeldung: 08.05.2002
(60) Teilanmeldung: 02012625.6
(73) Patentinhaber: Profil Verbindungstechnik GmbH & Co. KG, 61381 Friedrichsdorf (DE)
(72) Erfinder: BABEJ, Jiri, D-35423 Lich (DE)
(74) Vertreter: Manitz, Finsterwald & Partner GbR
(86) Internationale Anmeldenummer: EP0006465
(87) Internationale Veröffentlichungsnummer: WO01003880

(56) Entgegenhaltungen:
- EP-A- 0 028 019
- EP-A- 0 686 458
- EP-A- 0 922 866
- WO-A-95/27147
- DE-A- 19 647 831
- DE-A- 19 701 780
- DE-U- 29 509 439
- GB-A- 2 152 862
- US-A- 3 624 867
- US-A- 3 686 914
- US-A- 4 430 034
- US-A- 5 140 735

## Beschreibung

Die vorliegende Erfindung betrifft ein Funktionselement gemäß dem Oberbegriff der Ansprüche 1 und 10, sowie ein Verfahren zum Einbringen des Funktionselementes in ein Blechteil und'ein Zusammenbauteil bestehend aus dem Funktionselement und dem Blechteil.

Ein Funktionselement der eingangs genannten Art ist beispielsweise aus der deutschen Patentschrift 34 47 006 bekannt und ist dort als Gewindebolzen realisiert, wobei das Kopfteil mit einem rohrförmigen Stanz- und Nietabschnitt versehen ist, der zum Durchstanzen eines Blechteils und zur anschließenden Ausbildung eines Nietbördels ausgelegt ist, wodurch das Element im Blechteil befestigt wird. Zwischen dem rohrförmigen Stanz- und Nietabschnitt weist das Kopfteil einen Flansch auf mit einer senkrecht zur Längsachse des Elementes stehenden Ringfläche, die nach dem Einbringen des Elementes in ein Blechteil üblicherweise kurz unterhalb der dem Schaftteil zugewandten Seite des Blechteils angeordnet ist.

Der beim Durchstanzen des Blechteils gebildete Stanzbutzen wird in den Stanz- und Nietabschnitt hineingedrückt und unterstützt dabei die Nietverbindung mit dem Blechteil. Die DE-PS 34 47 006 beschreibt aber auch Funktionselemente in Form von Mutterelementen, wobei das Schaftteil als Verlängerung des Kopfteils zu verstehen ist und dieses mit einem Innengewinde versehen ist. Das Schaftteil muß aber nicht als Gewinde ausgebildet sein; es kommen viele Ausbildungen in Frage, beispielsweise ein Führungszapfen oder eine stiftartige Ausbildung an der beispielsweise Teppiche mittels entsprechenden Klammern befestigt werden können.

Solche Funktionselemente, d.h. entsprechend der DE-PS 34 47 006 C2, haben sich über mehrere Jahre bestens bewährt und ermöglichen es, eine hochwertige Verbindung zwischen dem Element und dem Blechteil zu erzeugen. Solche Elemente sind aber in der Herstellung relativ aufwendig und erfordern zum Teil die Anwendung von äußerst präzise arbeitenden Kaltschlagmaschinen, die zum Erzielen der gewünschten Qualität verhältnismäßig langsam arbeiten. Die Notwendigkeit, relativ aufwendige Kaltschlagmaschinen anzuwenden und die beschränkte Arbeitsgeschwindigkeit führen zu verhältnismäßig hohen Produktionskosten. Darüber hinaus wäre es für manche Anwendungen günstiger, wenn das Gewicht der Elemente reduziert werden könnte.

Der vorliegenden Erfindung liegt die Aufgabe zugrunde, Funktionselemente vorzustellen, die sehr rationelle und kostengünstig hergestellt werden können, die vorzugsweise ein geringeres Gewicht aufweisen als vergleichbare Elemente der eingangs genannten Art und die für viele Zwecke auch einen akzeptablen Auszieh- bzw. Ausdrehwiderstand aufweisen.

Zur Lösung dieser Aufgabe wird nach einer ersten Ausführungsvariante (Anspruch 1) vorgesehen, daß zumindest das Kopfteil des Elementes hohl ausgebildet ist und zumindest im wesentlichen den gleichen Außendurchmesser wie das Schaftteil aufweist. Das Element hat also zwischen dem Kopfteil und dem Schaftteil keinen Flansch. Es ist darüber hinaus nach einer zweiten Variante der Erfindung (Anspruch 10) moglich, den Kopfteil mit einem größeren oder kleineren Durchmesser als den des Schaftteils auszubilden, wobei zwar ein Übergang mit einer Änderung im Durchmesser zwischen dem Kopfteil und dem Schaftteil stattfindet, jedoch kein Flanschteil im üblichen Sinne vorliegt.

Die Funktion des Flanschteils bei den bekannten Elementen liegt einerseits darin, eine ausreichende Fläche zu schaffen, die verhindert, daß das Element im Blechteil locker wird, andererseits aber auch eine Fläche zu bilden, an der weitere Blechteile oder andere Bauteile befestigt werden können, beispielsweise, wenn es sich um ein Bolzenelement handelt, durch eine Mutter, die auf das ein Gewinde aufweisendes Schaftteil des Funktionselementes aufgeschraubt wird.

Bei den erfindungsgemäßen Funktionselementen ist dieser Flansch am Funktionselement selbst zunächst nicht vorhanden. Bei der Einbringung des Funktionselementes in das Blechteil wird, wie bei den an sich bekannten Elementen, das Stirnende des Funktionselementes durch das Blechteil gestanzt und zu einem Nietbördel auf der dem Schaftteil des Elementes abgewandten Seite des Blechteils umgeformt. Anschließend wird das Funktionselement in Längsrichtung so gestaucht, daß ein Teil des hohlen Kopfteils zu einem Ringfalz oder Ringwulst ausgebildet wird, der nunmehr als Flansch dient und die oben erläuterten Funktionen des üblichen Flansches übernimmt.

Dadurch, daß bei dem Funktionselement das Kopfteil zumindest im wesentlichen den gleichen Außendurchmesser aufweist wie das Schaftteil, sind die Anforderungen bei der Herstellung als Kaltschlagteil wesentlich geringer als bei der Herstellung eines Kopfteils mit Flansch, dessen Durchmesser wesentlich größer ist als der des Schaftteils. Somit können kostengünstiger und schneller arbeitende Kaltschlagmaschinen benutzt werden, wodurch die Produktionskosten gesenkt werden.

Weiterhin läßt sich das Funktionselement nicht nur durch Kaltschlagen, sondern auch durch Hochdruckformverfahren aus Rohrlängen kostengünstig herstellen. Darüber hinaus kommt eine Vielzahl anderer, preisgünstiger Herstellungsverfahren in Frage. Obwohl für die Anbringung des Teils an einem Werkstück nur ein hohles Kopfteil erforderlich ist, kann das Funktionselement durchaus insgesamt als rohrförmiges Teil hergestellt werden. Auch die Herstellung mit einem größeren Innendurchmesser im hohlen Kopfteil als im Schaftteil läßt sich kostengünstig realisieren, vor allem dann, wenn als Ausgangsmaterial ein Rohr verwendet wird.

Wie oben angedeutet wird mit der vorliegenden Erfindung der eigentliche Flansch erst nachträglich gebildet wird. Dadurch, daß das Blechteil formschlüssig innerhalb einer relativ großflächigen Aufnahme zwischen dem Nietbördel einerseits und dem Ringfalz andererseits eingeklemmt ist, weist das Funktionselement nach der Erfindung einen guten Widerstand gegen Verdrehung auf. Die Ausführungsvariante, bei der der Stanzbutzen innerhalb des Nietbördels eingeklemmt wird, erhöht die Verdrehsicherheit noch weiter und steigert außerdem den Ausziehwiderstand.

Sollte es notwendig sein, die Verdrehsicherheit noch weiter zu erhöhen, kann dies auf verschiedene Weise erfolgen. Einerseits können kleinere Verdrehsicherungsmerkmale wie Rillen oder Nasen im Bereich des den Nietbördel bildenden Bereiches des Kopfteils vorgesehen werden. Andererseits können sich radial erstreckende Nasen entweder in der Matrize zur Ausbildung des Nietbördels und/oder in der Stirnfläche des den Ringfalz bildenden Stempels vorgesehen werden, die dann auch zu einer gegenseitigen Verformung des Blechteils und den anliegenden Bereichen des Nietbördels und/oder des Ringfalzes führen, die der Erhöhung der Verdrehsicherheit dienen. Es ist auch möglich, die Oberfläche des Ringfalzes mit scharfen, sich radial erstreckenden Nasen oder dergleichen auszustatten, die für eine elektrischen Kontakt zur einer Anschlußklemme führen. Solche Nasen können entweder an der Außenfläche des Kopfteils vor dem Einbringen des Elementes vorgesehen werden, oder erst nachträglich bei der Ausbildung des Ringfalzes in der freiliegenden Oberfläche des Ringfalzes ausgebildet bzw. eingeprägt werden.

Besondere Vorteile und bevorzugte Ausführungsformen des Funktionselementes sowie des Verfahrens zum Einbringen des Elementes in ein Blechteil, des so hergestellten Zusammenbauteils, der zur Herstellung des Zusammenbauteils verwendeten Matrize und der verwendeten Stempelanordnung lassen sich den Patentansprüchen und der nachfolgenden Beschreibung entnehmen.

Die Erfindung wird nachfolgend näher erläutert anhand von Ausführungsbeispielen und unter Bezugnahme auf die beigefügte Zeichnung, in der zeigen:
- Fig. 1: eine in Längsrichtung teilweise geschnittene Ansicht eines Funktionselementes in Form eines Bolzenelementes,
- Fig. 2: der erste Schritt bei der Einbringung des Funktionselementes in ein Blechteil,
- Fig. 3: ein Zwischenstadium bei der Einbringung des Funktionselementes in ein Blechteil,
- Fig. 4: das Ende des Einbringungsverfahrens vor Öffnung der dazu verwendeten Presse bzw. Zange,
- Fig. 5: eine teilweise geschnittene Ansicht des fertigen Zusammenbauteils, d.h. das Ergebnis nach Beendigung des Verfahrensschrittes gemäß Fig. 4,
- Fig. 6: eine Darstellung eines Funktionselementes mit einem Kopfteil mit größerem Durchmesser als der des Schaftteils,
- Fig. 7: das Element der Fig. 6 im eingebauten Zustand,
- Fig. 8: eine Darstellung ähnlich der Fig. 6, bei der jedoch das Kopfteil einen kleineren äußeren Durchmesser aufweist als das Schaftteil,
- Fig. 9: das Funktionselement der Fig. 8 im eingebauten Zustand,
- Fig. 10: eine Darstellung ähnlich der Fig. 1, jedoch in einem größeren Maßstab und von einem hohlen Element,
- Fig. 11: eine teilweise in Längsrichtung geschnittene Ansicht eines weiteren erfindungsgemäßen Funktionselementes in Form eines Mutterelementes,
- Fig. 12: das Mutterelement der Fig. 11 im eingebauten Zustand,
- Fig. 13: ein teilweise in Längsrichtung geschnittenes Funktionselement, das als Stift zur Aufnahme einer Federklammer ausgebildet ist,
- Fig. 14: zeigt in den Fig. 14B, 14C und 14D einen abgewandelten Setzkopf, der für die Einbringung des rohrförmigen Elementes gemaß Fig. 14A in ein Blechteil derart ausgelegt ist, daß eine Beschädigung des Gewindezylinders nicht zu befürchten ist, wobei Fig. 14E das fertige Zusammenbauteil zeigt,
- Fig. 15: zeigt eine weitere Ausführungsform eines erfindungsgemäßen Elementes ähnlich dem der Fig. 1, auch hier in einer teilweise in axialer Richtung geschnittenen Darstellung, wobei dieses Element in der nachfolgenden Beschreibung der erfindungsgemäß bevorzugten Matrizen- und Verfahrenstechnik gemäß Fig. 16 bis 18 verwendet wird,
- Fig. 16A: einen axialen Schnitt durch eine erfindungsgemäße Matrize,
- Fig. 16B: eine Stirnansicht der Matrize der Fig. 16A in Pfeilrichtung B gesehen,
- Fig. 17: eine Zeichnungsfolge in der die Fig. 17A bis 17H, das erfindungsgemäß bevorzugte Verfahren zum Anbringen der erfindungsgemäßen Funktionselemente und unter Anwendung der erfindungsgemäß bevorzugten Matrize zeigt, wobei Fig. 17I das fertige Zusammenbauteil in teilweise geschnittener Form darstellt,
- Fig. 18A: bis
- Fig. 18C: eine bevorzugte Ausbildung der erfindungsgemäßen Stempelanordnung zeigt, der bei dem Verfahren gemäß Fig. 17 vorzugsweise zur Anwendung gelangt,
- Fig. 19: eine teilweise geschnittene Ansicht zur Erläuterung der Anbringung eines erfindungsgemäßen Elements an einem sandwichartigen Bauteil, wobei auf der linken Seite der mittleren Längsachse das Element und das Bauteil vor Anbringung des Elementes und auf der rechten Seite der mittleren Längsachse das Element und das Bauteil nach Anbringung des Elements gezeigt sind, und
- Fig. 20: eine schematische Darstellung ähnlich der Fig. 19, jedoch mit einer abgewandelten Art der Blechvorbereitung.

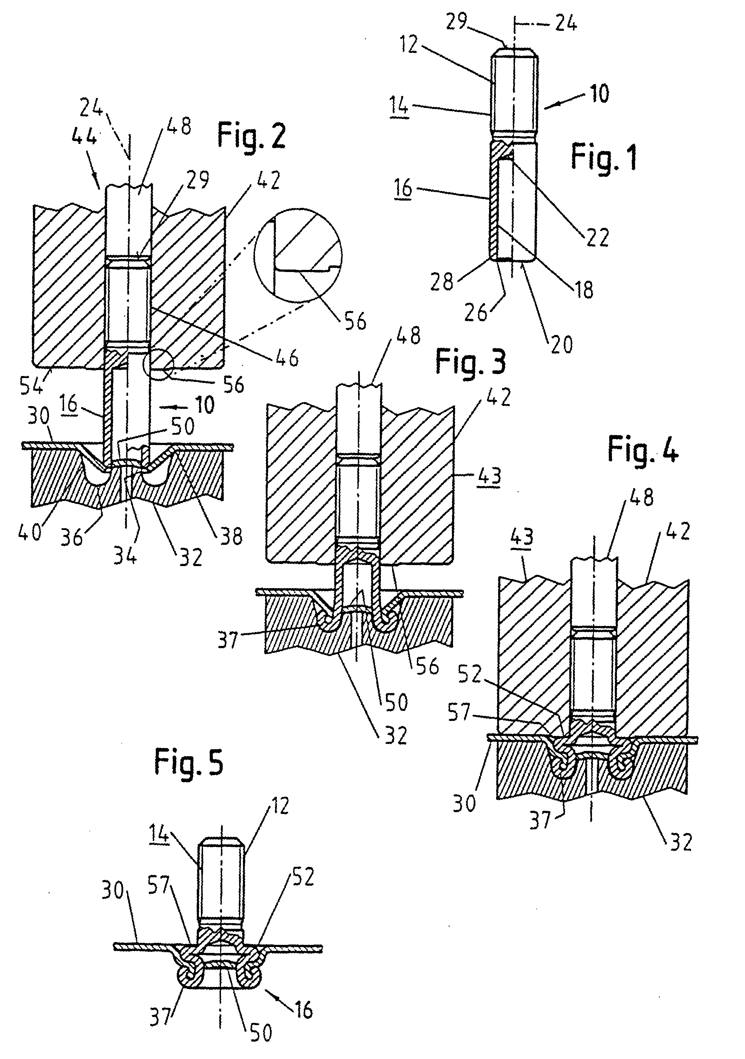

Das Funktionselement 10 der Fig. 1 besteht aus einem mit einem Außengewinde 12 versehenen Schaftteil 14 und einem hohlen Kopfteil 16 mit zumindest im wesentlichen dem gleichen Außendurchmesser wie der Gewindezylinder des Schaftteils 14.

Innerhalb des hohlen Kopfteils 16 befindet sich ein kreiszylindrischer Hohlraum 18, der von dem dem Schaftteil 14 abgewandten Stirnende 20 des Kopfteils 16 bis unmittelbar unterhalb des Gewindezylinders führt und dort in einer Querwand 22 endet. Der Hohlraum 18 hat hier die Form einer Bohrung. Die Form der Querwand 22 entspricht dem boden einer mit einem Spiralbohrer hergestellten Bohrung, obwohl der Hohlraum 18 und die Querwand 22 nicht unbedingt mit einem Spiralbohrer hergestellt werden müssen, obgleich dies eine Möglichkeit darstellt. Der Hohlraum und die Querwand könnten beispielsweise mittels eines Kaltschlagverfahrens hergestellt werden. Die Längsachse des Funktionselements 10, das hier als Bolzenelement realisiert ist, ist mit 24 bezeichnet.

Das Element 10 ist am Stirnende 20 genauso ausgebildet wie das entsprechende Stirnende des Stanz- und Nietabschnittes des Funktionselementes gemäß der DE-PS 34 47 006 C2, d.h. weist eine innere Schneidfläche 26 und eine äußere, abgerundete Stoß- und Ziehkante 28 auf.

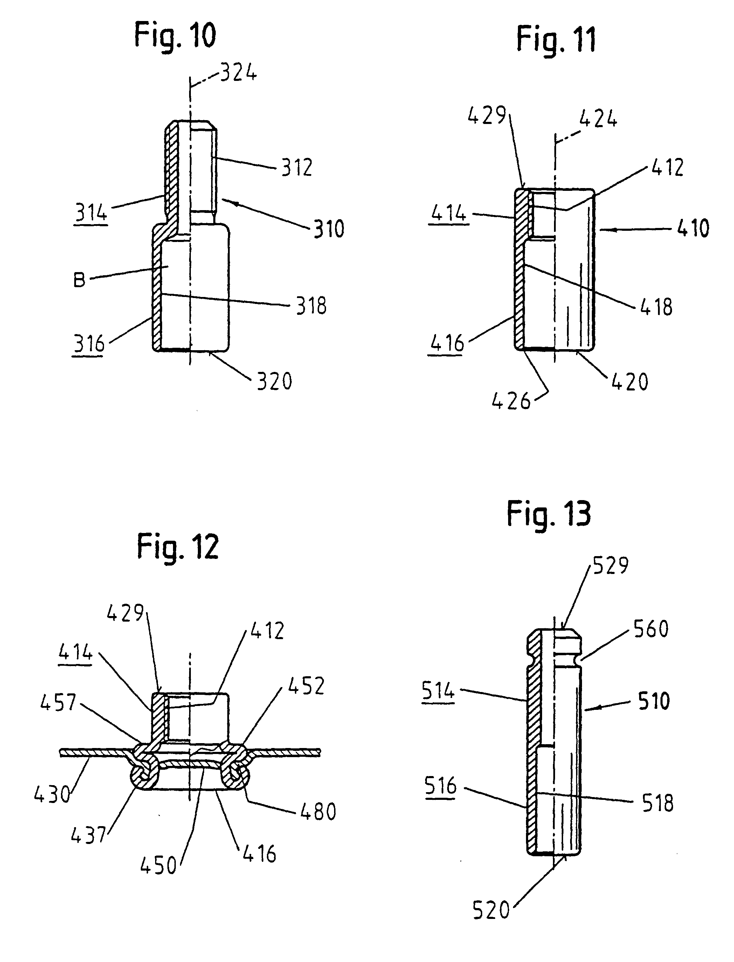

In Fig. 1 ist die Schneidfläche 26 sehr klein ausgebildet. Im Regelfall wird sie aber entsprechend der konischen Schneidfläche 426 der Ausführung gemäß Fig. 11 ausgebildet.

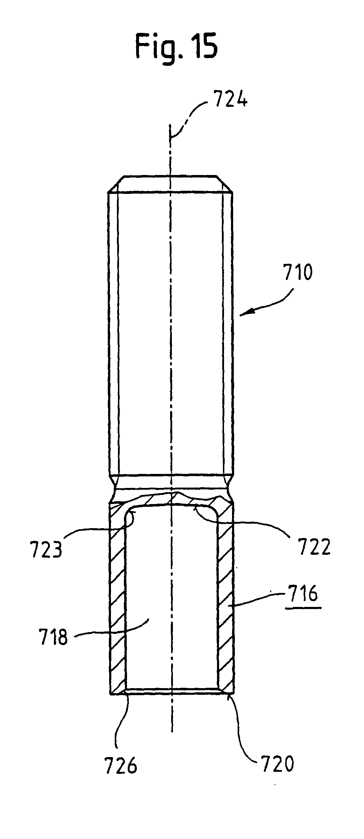

Die Fig. 2, 3 und 4 zeigen nun drei verschiedene Stadien beim Einbringen des Funktionselementes 10 gemäß Fig. 1 in ein Blechteil 30. Das Einbringungsverfahren wird später mit Bezug auf die weiteren Figuren 15-18 näher erläutert, welche die derzeit bevorzugte Ausführungsform im Detail darstellen. Die jetzige Beschreibung soll für den sachkundigen Leser als Einleitung dienen.

Wie in Fig. 2 gezeigt, ist das Blechteil 30 unten auf einer Matrize 32 abgestützt, die mit einem mittig angeordneten zylindrischen Stempelansatz 34 ausgestattet ist, der entsprechend dem Stempelansatz der entsprechenden Matrize gemäß der DE-PS 34 47 006 C2 ausgelegt ist. Dieser Stempelansatz ist umgeben von einer gerundeten Ringeinsenkung 36, die an dem dem Blechteil 30 zugewandten Stirnende 38 der Matrize in eine ringförmige Vertiefung 40 größeren Durchmessers übergeht. Insgesamt ist die Matrize 32 der in der DE-PS 34 47 006 beschriebenen Matrize 180 sehr ähnlich.

Die Matrize 32 befindet sich in einem unteren Werkzeug einer Presse (nicht gezeigt). Das Blechteil wird gegen das untere Werkzeug bzw. gegen das Stirnende 38 der Matrize 32 durch einen beispielsweise rohrförmigen Niederhalter, der nicht gezeigt ist, der aber konzentrisch zum zylindrischen Außenstempel 42 des Setzkopfes 44 angeordnet ist, geklemmt. Das heißt, das Blechteil 30 wird außerhalb der Ringvertiefung 40 festgeklemmt. Das Schaftteil des Funktionselements 10 befindet sich in der zylindrischen Führungspassage 46 des Setzkopfes 44, während das Kopfteil 16 aus dem zylindrischen Außenstempel 42 herausragt. Innerhalb des rohrförmigen Außenstempels 42 und konzentrisch zu ihm angeordnet befindet sich ein Innenstempel 48, der auf das Stirnende 29 des Schaftteils 12 drückt. Obwohl der Innenstempel 48 zum Einführen von jeweiligen Funktionselementen gegenüber dem Außenstempel zurückgezogen werden kann, bleibt die relative Stellung der Innen und Außenstempel 48,42 für die Verfahrensschritte gemäß Fig. 2, 3 und 4 konstant. Das gleiche gilt auch für die später zu beschreibende Einrichtungen.

Im Stadium des Verfahrensschrittes gemäß Fig. 2 hat das Stimende 20 des Funktionselementes unter dem Druck des Innenstempels 48 das Blechteil in die Ringvertiefung 40 der Matrize 32 hineingedrückt und eine flache, in etwa konusförmige Vertiefung im Blechteil 30 gezogen. Im Stadium der Fig. 2 hat der Stempelansatz 34 in Zusammenarbeit mit der Schneidfläche 26 am Stirnende des Kopfteils 16 des Funktionselements 10 einen Stanzbutzen 50 aus dem Blechteil herausgeschnitten.

Aus Fig. 3 ist ersichtlich, daß die aus dem Innenstempel 48 und dem Außenstempel 42 bestehende Stempelanordnung 43 weiter nach unten gefahren ist, wobei der freie Endbereich des hohlen Kopfteils des Elementes 10 aufgrund der gerundeten Ringeinsenkung bzw. Rollfläche 36 in der Matrize um den nach unten gezogenen Rand der Lochung des Blechteils herum zu einem ringförmigen Nietbördel 37 geformt ist. Das Loch im Blechteil weist in diesem Stadium des Verfahrens einen Randbereich auf, der der Mündung einer Trompete ähnelt.

Im weiteren Verlauf der gemeinsamen, nach unten gerichteten Bewegung des Innenstempels 48 und Außenstempels 42 wird die zylindrische Wand des Kopfteils 16 im Bereich unmittelbar unterhalb des Schaftteils 14 so gestaucht, daß sich ein Ringfalz 52 bildet, wie aus Fig. 4 ersichtlich. Die Zwänge, denen das Element unterliegt aufgrund der Führung durch den Außenstempel 42 einerseits und durch die Lochrandung und den Stanzbutzen andererseits stellen sicher, daß die Verformung so abläuft wie in Fig. 4 gezeigt.

Man merkt aus den Fig. 2 und 3, daß der Außenstempel 42 an seinem Stirnende 54 eine ringförmige Nase 56 mit einer sich senkrecht zur Längsachse 24 des Funktionselementes erstreckenden Stirnfläche aufweist. Diese ringförmige Nase 56, die nicht zwingend erforderlich ist, drückt im Verfahrensstadium gemäß Fig. 4 auf den Ringfalz und stellt sicher, daß hier eine ausgeprägte Faltung erfolgt, so daß das Material der Wandung des Kopfteils haarnadelartig, d.h. durch 180°, gefaltet wird und die zwei so gebildeten Lagen des Materials satt aneinander liegen. Weiterhin stellt die Ringnase sicher, daß die so gebildete Ringfläche 57 des Ringfalzes etwas unterhalb der Ebene des Blechteils 30 liegt. Der so gebildete Ringflansch 52 hat nunmehr die Funktion eines Flansches, der bei den bisher bekannten Elementen bereits im Ausgangsstadium des Elementes vorlag. Durch die Ringnase 56 wird außerdem sichergestellt, daß das Materialpaket im Bereich der formschlüssigen Verbindung des hohlen Kopfteils 16 des Funktionselements 10 mit dem Blechteil 30 in axialer Richtung gestaucht wird und somit äußerst stabil und fest ausgeführt ist. Gegebenenfalls kann die Ringnase 56 mit formgebenden Merkmalen ausgestattet werden, die einerseits zu einer gewählten, der Verdrehsicherheit förderlichen, verhakten Anordnung zwischen dem Blechteil 30 und dem hohlen Kopfteil 16 führt, andererseits auch so ausgeführt werden kann, daß beispielsweise Nasen in der in Fig. 4 und Fig. 5 oberen Ringfläche des Ringfalzes 52 entstehten die für einen hochwertigen elektrischen Kontakt sorgen bspw. wenn das Funktionselement als Masseanschlußelement benutzt wird. Alternativ oder ergänzend zu dieser Art der Realisierung der Verdrehsicherheit kann das Element mittels eines Klebers mit dem Blechteil verklebt werden. Beispielsweise kann das Funktionselement 10 im Bereich des Kopfteils 16 mit einem Trockenkleber beschichtet werden, der erst unter Druck bei der Anbringung des Funktionselements an das Blechteil aktiviert wird.

Im Stadium der Fig. 4 ist das Einbringen des Funktionselements 10 in das Blechteil 30 fertig. Die Presse öffnet sich und das so erzeugte Zusammenbauteil weist dann die Form auf, die aus Fig. 5 ersichtlich ist.

In dieser Beschreibung wird zunächst davon ausgegangen, daß es sich bei der Matrize 32 um eine Matrize handelt, die im unteren Werkzeug einer Presse angeordnet ist. In diesem Fall wird der Setzkopf 44 entweder am oberen Werkzeug der Presse oder auf einer Zwischenplatte der Presse befestigt. Die Matrize 32 kann aber genausogut auf der Zwischenplatte angeordnet werden und dann mit einem Setzkopf zusammenarbeiten, der am unteren oder oberen Werkzeug der Presse angeordnet ist. Ebenso ist es möglich, die Matrize 32 in der oberen Platte des Werkzeuges anzubringen und den Setzkopf an einer Zwischenplatte oder am unteren Werkzeug der Presse zu montieren. Darüber hinaus können der Setzkopf 44 und die Matrize 32 von einem Roboter aufeinander zu gedrückt werden oder durch anderweitige Vorrichtungen zusammengebracht werden.

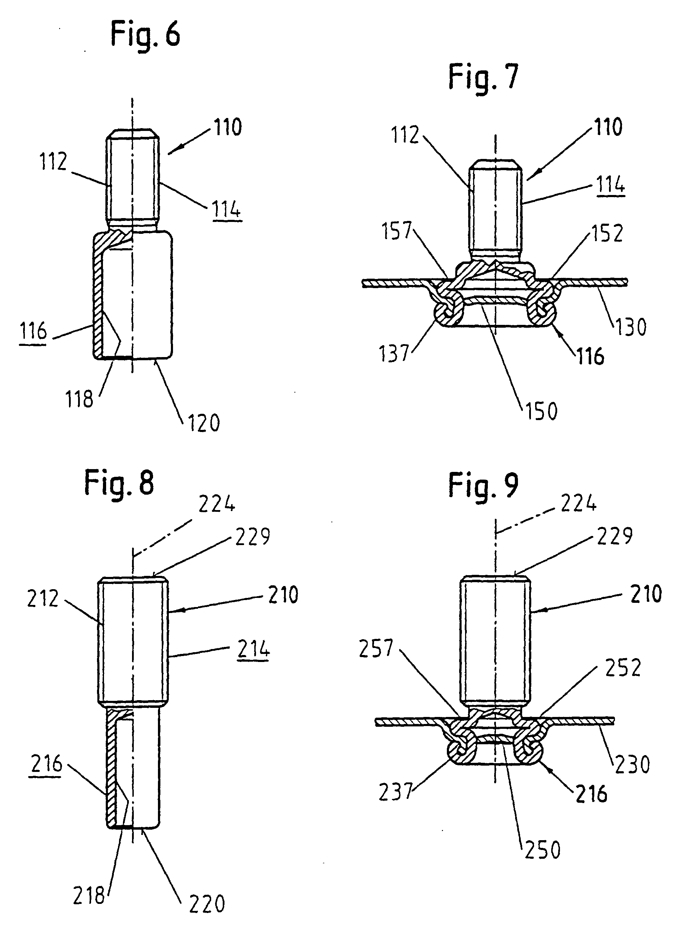

Die weiteren Fig. 6 bis 13 zeigen nun verschiedene mögliche Abwandlungen des erfindungsgemäßen Funktionselementes und werden im folgenden näher beschrieben. In allen nachfolgenden Beispielen werden die gleichen Bezugszeichen verwendet wie für die Ausführung gemäß der Fig. 1 bis 5, jedoch für jede Ausführungsform sukzessiv um die Grundzahl 100 erhöht, um eine eindeutige Identifizierung herbeizuführen. Es versteht sich aber, daß Merkmale, die mit den gleichen zwei Endziffern gekennzeichnet sind, stets die gleiche Funktion oder eine entsprechende Funktion haben wie bei dem Ausführungsbeispiel gemäß Fig. 1 bis 5. Solche Merkmale werden nur dann gesondert beschrieben, wenn eine abweichende Ausbildung eine besondere Bedeutung hat.

Fig. 6 zeigt, daß es nicht zwangsläufig erforderlich ist, daß das Kopfteil 116 des Funktionselements 110 den gleichen Durchmesser aufweist wie das Schaftteil 114. In Fig. 6 weist das hohle Kopfteil 116 einen größeren Durchmesser auf als das Schaftteil 114. Auch hier verfügt das Funktionselement 110 im Ausgangszustand nicht über einen eigentlichen Flansch. Der Flansch wird vielmehr erst beim Einbringen des Funktionselements 110 in ein Blechteil gebildet, wie im Zusammenhang mit der ersten Ausführungsform gemäß den Fig. 1 bis 5 beschrieben und in Fig. 7 dargestellt.

Fig. 7 zeigt nun das Funktionselement 110 der Fig. 6 im eingebauten Zustand. Es ist hier ohne weiteres ersichtlich, daß der Ringfalz 152 einen Flansch bildet, wie bei der Ausführung gemäß Fig. 5.

Bei der Ausführungsform gemäß Fig. 8 weist das Kopfteil 216 einen kleineren äußeren Durchmesser auf als der äußere Durchmesser des Gewindezylinders des Schaftteils 214 des Funktionselements 210. Auch mit einer solchen Ausbildung fehlt es beim Funktionselement 210 zunächst an einem Flansch der zur Anlage auf das Blechteil kommt. Ein Flansch wird dennoch beim Einbringen des Funktionselementes in ein Blechteil durch die Stauchung des hohlen Kopfteils 216 zu einem Ringfalz bzw. zu einer Ringfaltung 252 gebildet, wie aus Fig. 9 ersichtlich ist.

Fig. 10 zeigt nunmehr, daß das Funktionselement 310 auch rohrförmig ausgebildet werden kann. Das Funktionselement 310 der Fig. 10 ist nämlich so ausgebildet, daß auch das Schaftteil 314 hohl ist. Ein solches Funktionselement hat den besonderen Vorteil, daß es aus einem Rohrprofil ohne weiteres hergestellt werden kann, wobei die in Fig. 10 gezeigte Aufweitung der Bohrung B des Rohrs im Bereich des Hohlraumes 318 ohne weiteres vorgenommen werden kann, beispielsweise entweder beim Kaltschlagen oder bei einem Hochdruckumformverfahren innerhalb einer entsprechenden Außenform. Das Außengewinde 312 des Funktionselements 310 der Fig. 10 kann, wie in den anderen bisherigen Beispielen, durch ein Walzverfahren erzeugt werden, kann aber auch ebenfalls durch ein Hochdruckumformverfahren innerhalb einer Form erzeugt werden. Dies ist aufgrund der Benutzung eines Rohrprofils oder Abschnittes eines Rohrprofils als Ausgangsmaterial möglich, da der erforderliche Innenhochdruck ohne weiteres über den durchgehend hohlen Innenraum des Rohres in allen Längsbereichen des Rohrs bzw. in einer der Länge des Funktionselements entsprechenden Rohrlänge hineingeführt werden kann.

Im in ein Blechteil eingebauten Zustand entspricht die formschlüssige Verbindung des Kopfteils 316 mit dem Blechteil der bisherigen Ausbildung gemäß Fig. 5.

Fig. 11 zeigt eine weitere Ausführungsvariante ähnlich der Ausführungsform gemäß Fig. 10, jedoch wird hier das Element mit einem Innengewinde 412 versehen.

Fig. 12 zeigt den eingebauten Zustand des Funktionselements gemäß Fig. 11. Man merkt, daß das hohle Kopfteil 416 genauso verformt wird, wie bei den bisherigen Ausführungsformen - mit dem Unterschied, daß hier die obere Ringfläche 457 des Ringfalzes 452 etwas oberhalb des Blechteils angeordnet ist. Dies ist aber nicht zwingend erforderlich. Die entsprechende Fläche könnte genauso unterhalb der Ebene des Blechteils 430 oder in der gleichen Höhe wie die Ebene des Blechteils angeordnet werden.

Man merkt bei Fig. 12 auch, daß der Stanzbutzen 450 die mittlere Passage des hohlen Funktionselements 410 im Bereich des Nietbördels 437 schließt, so daß an dieser Stelle eine Abdichtung erfolgt. Der Stanzbutzen kann aber auch entfernt werden.

Die Ausführung gemäß Fig. 12 hat dann den besonderen Vorteil, daß ein Bolzenelement (nicht gezeigt) von unten kommend in das Funktionselement 410 eingeschraubt werden kann. Hierdurch wird der Ringfalz und das Nietbördel sowie das dazwischengeklemmte Material des Blechteils 430 beim Festziehen des Bolzens noch fester aneinander gezogen, wobei die große Anlagefläche 480 des Ringfalzes eine sehr stabile Verbindung bildet. Für den Fall, daß das Funktionselement 410 mit einem solchen Bolzen zu verwenden ist, wird der Stanzbutzen 450 beispielsweise mittels eines Vorlochstempels in eine mittlere Passage der Matrize hineingedrückt und entfernt. Die Entfernung eines solchen Stanzbutzens auf diese Art und Weise ist an sich bekannt. Der vorlaufende Lochstempel wird in solchen Fällen zum Vorlochen des Blechteils benutzt. Die Matrize ist dann in an sich bekannter Weise so ausgebildet, daß es lediglich das freie Ende des hohlen Kopfteils um das entsprechend verformte Blechteil verformt. Das heißt, die Matrize ist statt mit einem Stempelansatz wie 34 in Fig. 2 mit einem mittleren Loch versehen ausgebildet. Der Butzen kann aber auch in einer nachfolgenden Operation ausgestoßen werden, wenn das Element wie in Fig. 2 dargestellt eingebracht wird.

Fig. 13 zeigt ein Funktionselement 510, das ebenfalls rohrförmig ausgebildet ist, jedoch kein Gewinde aufweist. Statt dessen weist das Funktionselement eine umlaufende Rille 560 auf, die zur Aufnahme einer Federklammer (nicht gezeigt) gedacht ist. Man merkt auch, daß das freie Stirnende 529 des Funktionselements 510 der Fig. 13 konusförmig ausgebildet ist. Die entsprechende Federklammer kann nach unten über diese Konusfläche gedrückt werden und springt anschließend in die Rille 560 hinein.

Das Funktionselement 510 der Fig. 13 kann in dieser oder in leicht abgewandelter Form (beispielsweise ohne umlaufende Rille 560) in ein Blechteil eingesetzt werden und entweder als Stift oder als zylindrischer Zapfen verwendet werden. Es könnte auch mit einer gewindeformenden Schraube benutzt werden, die beim Eindrehen in das fertige Zusammenbauteil im hohlen Schaftteil 514 des Funktionselements 510 selbst ein Gewinde formt oder schneidet. Bei den Ausführungsbeispielen der Fig. 10, 11, 12 und 13 kann ohne weiteres das hohle Kopfteil 316, 416, 516 einen größeren oder kleineren Durchmesser haben als der äußere Durchmesser des entsprechenden Schaftteils 314, 414, 514.

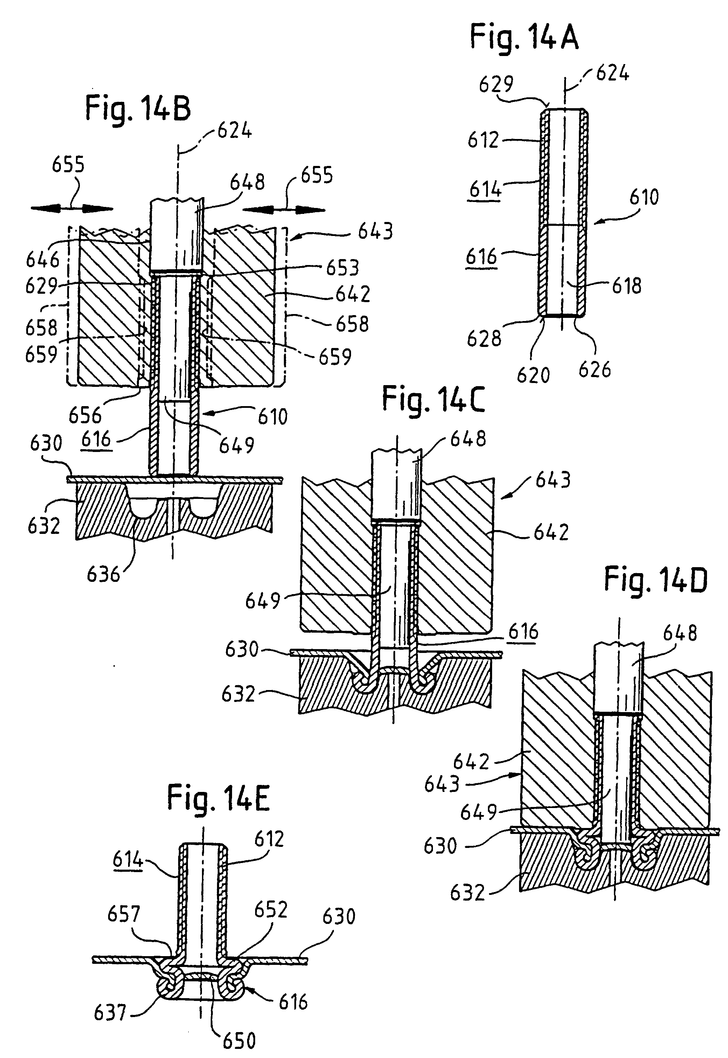

Bei den Ausführungsbeispielen mit einem hohlen Schaftteil kann der Innenstempel 48 gegebenenfalls in den hohlen Innenraum des Schaftteils hineingeführt werden, um das Funktionselement während des Stauchvorganges zu stabilisieren. Diese Vorgehensweise, die im übrigen die Ausbildung der Ringfaltung vorteilhaft beeinflußt, ist in Fig. 14, in den Zeichnungen 14B, 14C und 14D gezeigt. Zu diesem Zweck weist der Innenstempel 648 einen zapfenartigen Vorsprung 649 mit einem Durchmesser entsprechend dem Innendurchmesser 651 des hohlen Schaftteils 614 auf, wobei der Vorsprung 649 über eine Ringschulter 653 in den oberen Teil des Innenstempels übergeht, die auf das ringförmige Stirnende 629 des Schaftteils drückt.

Der Außenstempel 642 der Stempelanordnung 643 gemäß den Fig. 14B bis 14D kann mit einer kreiszylindrischen Bohrung versehen werden, deren Durchmesser dem Durchmesser des Außengewindes 612 des Schaftteils 614 entspricht, in etwa so, wie in Fig. 14C und 14D dargestellt.

Trotz des zapfenartigen Vorsprunges 649 des Innenstempels 648 könnte es aber mit einer solchen Anordnung unter Umständen vorkommen, daß der Gewindezylinder verletzt wird und/oder daß der Gewindezylinder gestaucht wird. Die Fig. 14B deutet mit den Doppfelpfeilen 655 auf eine mögliche Abhilfe hin. Diese Abhilfe besteht darin, daß der Außenstempel 642 in mindestens zwei Segmente unterteilt wird, die entsprechend den Doppfelpfeilen 655 radial weg vom Element 610 in die Stellung 657 bewegt werden können, in der sie die Einführung des Elementes 610 durch den Stempelkanal 646 des Setzkopfes nicht behindern. Diese Segmente, von denen es zwei, drei oder mehr geben kann und die dann eine entsprechende, winkelmäßige Erstreckung aufweisen (beispielsweise 180°, 120° etc.), können an ihren radial inneren Seiten mit einer zu dem Gewindezylinder 612 passende Form 659 versehen werden, so daß bei einer Schließbewegung der Segmente des Außenstempels in Richtung radial auf die Längsachse 624 zu die Gewindesegmente des entsprechenden Gewindes 659 in die Gewindegänge des Gewindezylinders 612 eingreifen und hierdurch einerseits der Übertragung von axialen Kräften auf das Element 610 dienen und andererseits verhindern, daß eine Stauchung oder Verletzung des Gewindezylinders 612 eintritt. Zu diesem Zweck ist die Gestalt der Gewindesegmente 659 komplementär zu der des Gewindezylinders 612 gewählt.

Nach der Anbringung des Elementes gemäß Fig. 14D werden die Segmente des Außenstempels 642 dann wieder auseinander bewegt, d.h. in Richtung radial nach außen weg von der Längsachse 624, damit der Außenstempel 642 zur Entnahme des fertigen Zusammenbauteils gemäß Fig. 14E nach oben gefahren werden kann, ohne daß hierdurch der Gewindezylinder beschädigt wird.

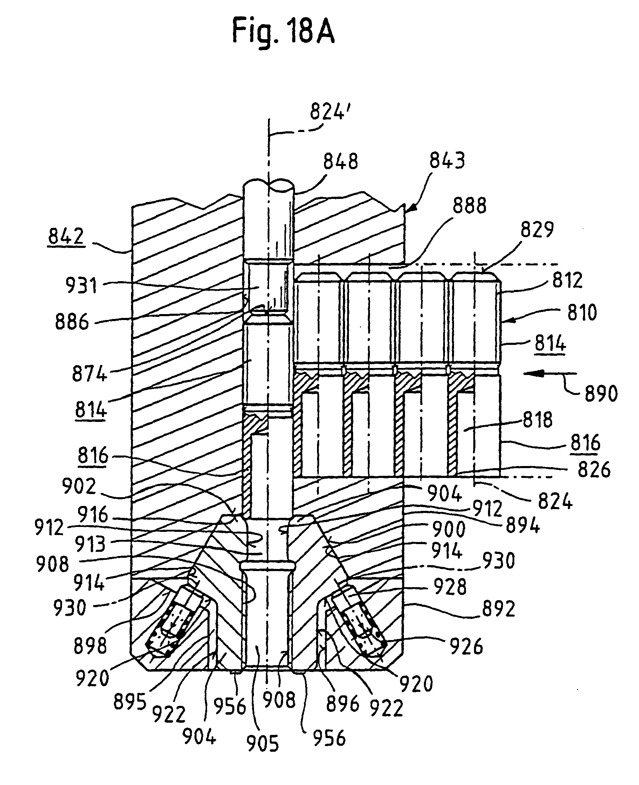

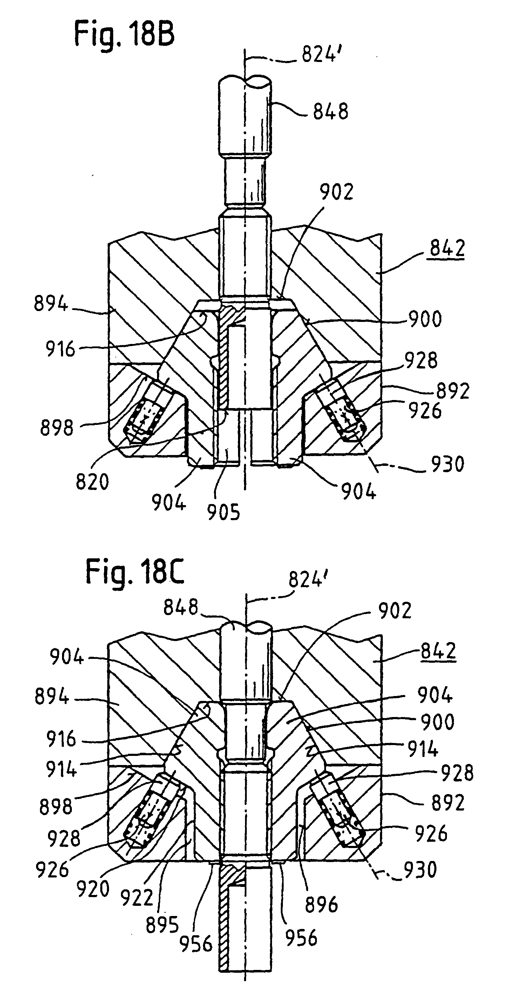

Das Konzept der radialen Bewegung von Segmenten des Außenstempels 642 wird später anhand eines bevorzugten Ausführungsbeispiels gemäß Fig. 18 näher beschrieben.

Fig. 15 zeigt nun ein Funktionselement 710, das dem Funktionselementelement 10 der Fig. 1 sehr ähnlich ist und sich im Grunde genommen von diesem nur dadurch unterscheidet, daß der Boden des Hohlraumes 718, der die Querwand 722 bildet, hier statt konusförmig nur leicht konkav ausgebildet ist und sich im wesentlichen senkrecht zur Längsachse 724 des Elementes 710 erstreckt und über einen großzügigen Radius 723 in die zylindrische Außenwand des Kopfteils 716 des Elementes 710 übergeht. Diese Form des die Querwand 722 bildenden Bodens ist zwar nicht zwingend erforderlich, führt aber in einem praktischen Beispiel zu einer qualitativ hochwertigen Abstützung des Schaftteils, was der Stabilität der Verbindung dient.

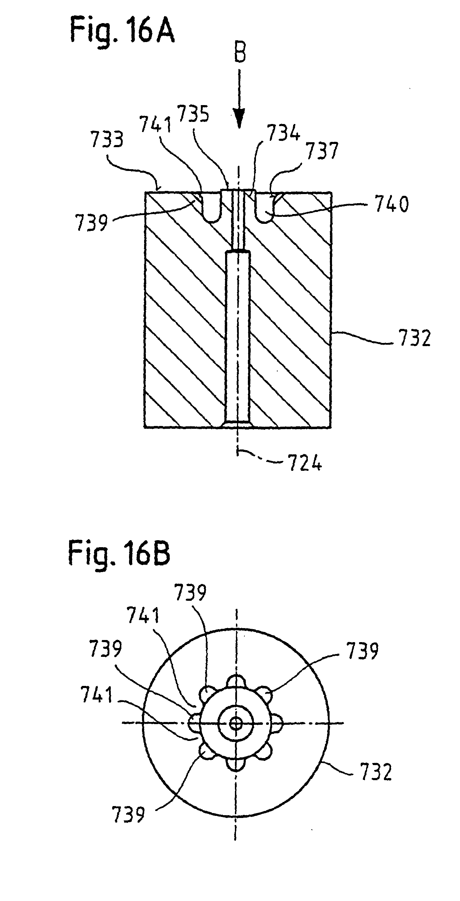

Die Fig. 16A und 16B zeigen die Matrize, die zum Einsetzen des Funktionselements 710 der Fig. 15 vorzugsweise zur Anwendung gelangt. Diese Matrize 732 ist der Matrize gemäß Fig. 2 zwar ähnlich, weist jedoch gewisse Abweichungen auf. Der Stempelansatz 734 wird nämlich bei diesem Ausführungsbeispiel in Richtung der Längsachse 724 axial nach oben verlängert, so daß die flache Stirnseite 735 des Stempelansatzes 734 geringfügig oberhalb der Stirnseite 733 der Matrize hinausragt.

Diese Ausbildung bringt den Vorteil, daß das Funktionselement zwar weiterhin mit einer konusförmigen Schneidfläche 726 ausgeführt wird, die Stirnseite 720 des Kopfteils 716 ist jedoch einfach als Ringfläche ausgebildet, die senkrecht zur Längsachse 724 steht und nicht abgerundet ist wie bspw. bei der Rundung 28 in Fig. 1. Hierdurch wird ein Herstellungsschritt bei der Herstellung des Funktionselements gespart. Die ringförmige Vertiefung 740 der Matrize 732 ist im Prinzip ähnlich der ringförmigen Vertiefung 40 der Matrize 32 gemäß Fig. 2 ausgebildet, ist jedoch am Übergang in die Stirnseite 733 konvex gerundet, wie bei 737 gezeigt. Darüber hinaus sind in diesen gerundeten Übergang 737 mehrere schräggestellte Nuten 739 eingearbeitet - in diesem Ausführungsbeispiel acht solche Nuten, wie in Fig. 16B dargestellt - so daß sich radial erstreckende Nasen 741 jeweils zwischen zwei benachbarten Nuten 739 ausgebildet sind.

Die Nuten 739 sind im Querschnitt zumindest im wesentlichen halbkreisförmig und gut abgerundet wie auch die dazwischen liegenden Nasen 741, so daß sie das Blechteil zwar verformen, jedoch nicht verletzen. Diese Nuten 739 und Nasen 741 dienen der Erhöhung der Verdrehsicherheit des Elementes in bezug auf das Blechteil.

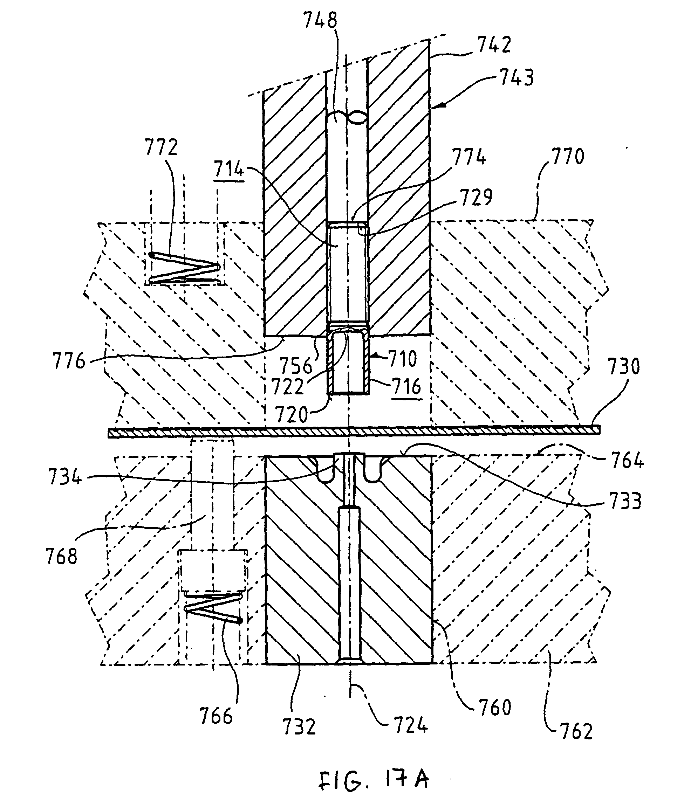

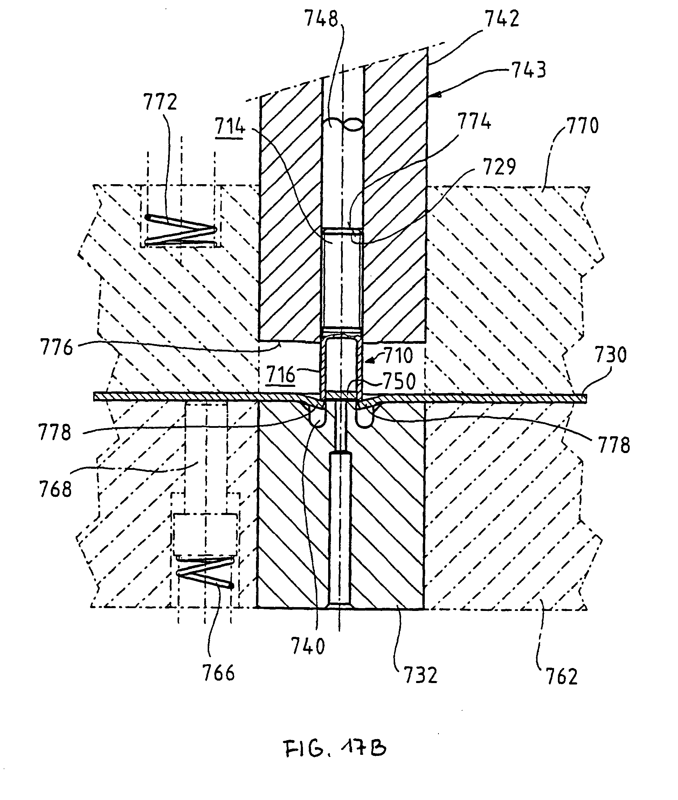

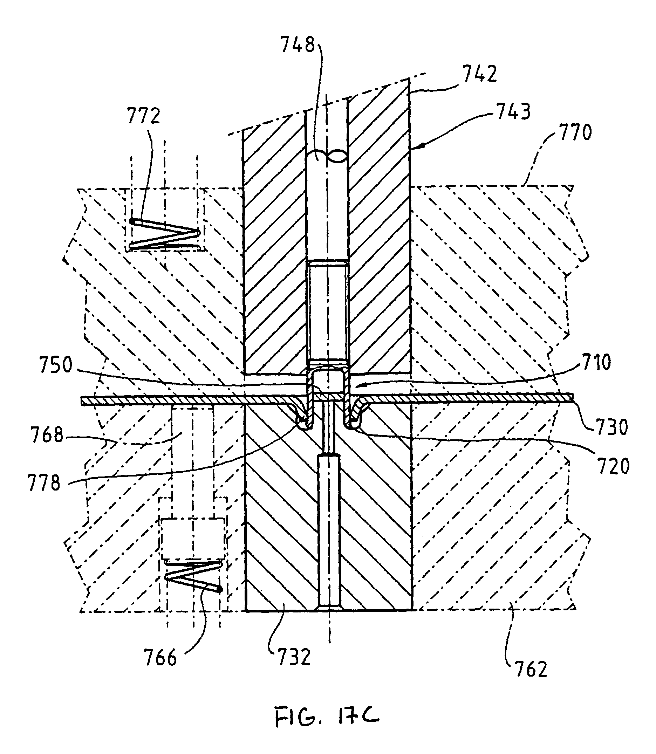

Die Fig. 17A bis 17H zeigen nunmehr die Matrize 732 gemäß Fig. 16, die verwendet wird, um das Funktionselement 710 in ein Blechteil 730 mit Hilfe einer Stempelanordnung 743 anzubringen.

Die Matrize 732 befindet sich hier in einer Bohrung 760 eines unteren Werkzeuges 762 einer Presse, deren Oberseite 764 bündig mit der Stirnseite 733 der Matrize angeordnet ist. Im unteren Werkzeug 762 befinden sich mehrere, mit Feder 766 nach oben vorgespannte Stößel 768, die das Blechteil 730 bei der Einführung in die Presse abstützen, jedoch aufgrund der von einem Niederhalter 770 ausgeübten Kraft beim Schließen der Presse nach unten drückbar sind, so daß das Blechteil 730 an der Stirnseite 733 der Matrize 732 und an der Oberseite 764 des unteren Werkzeuges im Bereich der Matrize zur Anlage kommt und dort zwischen dem Niederhalter 770 und der Matrize 732 bzw. dem unteren Werkzeug 762 unverrückbar geklemmt ist.

Es können beispielsweise drei solche federvorgespannte Stößel 768 vorgesehen werden, die beispielsweise in gleichmäßigen Winkelabständen um die mittlere Längsachse der Matrize 732 angeordnet sind, wobei aufgrund der Schnittzeichnung nur der eine Stößel 768 ersichtlich ist. Die mittlere Längsachse der Matrize ist zugleich die mittlere Längsachse 724 des Funktionselements 710, d.h. damit ausgerichtet.

Der Niederhalter 770 ist auch in Richtung auf das Blechteil 730 zu vorgespannt und zwar durch Federn 772, die hier - wie die Feder 776 - schematisch als Schraubendruckfeder angedeutet sind, obwohl auch andere Federarten in Frage kommen, die im Werkzeugbau bestens bekannt sind. Der Niederhalter 770 kann zu einem die Stempelanordnung 743 aufweisenden Setzkopf oder zu einem Werkzeug der Presse gehören an dem der Setzkopf angebaut ist. Die Feder 772 stützen sich dementsprechend an ihren oberen Enden am Setkopf oder am Werkzeug ab.

In diesem Beispiel werden ebenfalls drei Federn 772 in gleichmäßigen Winkelabständen um die mittlere Längsachse 724 angeordnet, so daß der Niederhalter 770 unter der Kraft dieser Federn gleichmäßig nach unten gedrückt wird.

Fig. 17A zeigt den Zustand, nachdem das Blechteil 730 in die Presse eingeführt wurde und die Schließbewegung der Presse begonnen hat und zwar gerade soweit, daß der Niederhalter 770 auf der Oberseite des Blechteils anliegt und das Blechteil zwischen sich und den Stößel 768 leicht klemmt.

Die Stempelanordnung 743 besteht auch hier aus einem Außenstempel 742 und einem Innenstempel 748, wobei das untere Stirnende 774 des Innenstempels 748 auf die obere Stirnseite 729 des Funktionselements 710 drückt. Man merkt, daß das Kopfteil 716 des Funktionselements 710 zumindest im wesentlichen vollständig aus dem Außenstempel 742 hinausragt, wobei die den Boden bildende Querwand 722 nur geringfügig oberhalb der unteren Stirnseite 776 des Außenstempels 742 angeordnet ist. Das Schaftteil 714 des Funktionselements 712 befindet sich dagegen vollständig innerhalb des Außenstempels 742.

Man kann bei dieser Darstellung unterstellen, daß das untere Werkzeug 762 das untere Werkzeug einer Presse darstellt, während der Setzkopf im oberen Werkzeug der Presse oder auf einer Zwischenplatte befestigt ist. Auch sind andere Anordnungen denkbar, die am Ende der Beschreibung der Fig. 5 beschrieben wurden.

Beim weiteren Schließen der Presse wird der federvorgespannte Niederhalter 770 so fest gegen das Blechteil 730 gedrückt, daß dieses die federvorgespannten Stößel 768 nach unten drückt, bis das Blechteil 730 nunmehr fest zwischen dem Niederhalter 770 und dem unteren Werkzeug 762 bzw. der Stirnseite 733 der Matrizeunverrückbar geklemmt ist. In diesem Beispiel ist eine weitergehende, nach unten gerichtete Bewegung des Niederhalters 770 nicht vorgesehen. Das obere Werkzeug der Presse bzw. die Zwischenplatte der Presse können jedoch entsprechend der weiteren Schließbewegung der Presse weiter nach unten bewegt werden, wodurch die Schraubendruckfeder 772 weiter komprimiert werden, ohne daß der Niederhalter 770 seine Position ändert.

Bei dieser weiteren Schließbewegung der Presse ist auch der Außenstempel 742 mit dem Innenstempel 748 im Stadium der Fig. 17B so weit nach unten gedrückt, daß das untere Stirnende 720 des Funktionselements 710 in Zusammenarbeit mit dem Stempelansatz 734 der Matrize 732 einen Stanzbutzen 750 aus dem Blechteil 730 gerade herausgetrennt hat.

Man merkt, daß der Innendurchmesser des Schaftteils 716, d.h. der Durchmesser des Hohlraumes 18, nur geringfügig größer ist als der Außendurchmesser des Stempelansatzes 734. Man merkt außerdem, daß das untere Stirnende 720 des Funktionselements 710 unter dem Druck des Stempels 748 den Randbereich 778, der die durch das Heraustrennen des Stanzbutzens 750 entstandene Lochung des Blechteils 730 in die Ringeinsenkung 740 der Matrize 732 hineingedrückt hat, so daß dieser Randbereich 778 eine konusförmige Vertiefung im Blechteil 730 bildet.

Bei der weiteren Schließbewegung der Presse gemäß Fig. 17C wird der Randbereich 778 des durch das Heraustrennen des Stanzbutzens 750 entstandenen Loches noch weiter in die Ringeinsenkung 736 hineingedrückt, wobei das Stirnende 720 des Funktionselements 710 gerade den U-förmigen Bodenbereich der Ringeinsenkung 736 erreicht hat und gerade im Begriff ist, durch die Form dieses Bodenbereiches radial nach außen verformt zu werden.

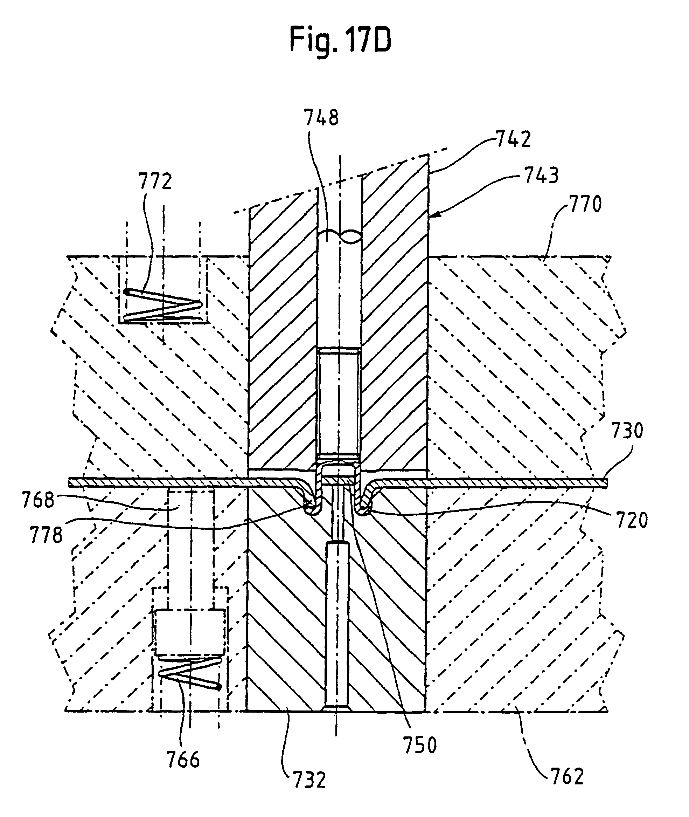

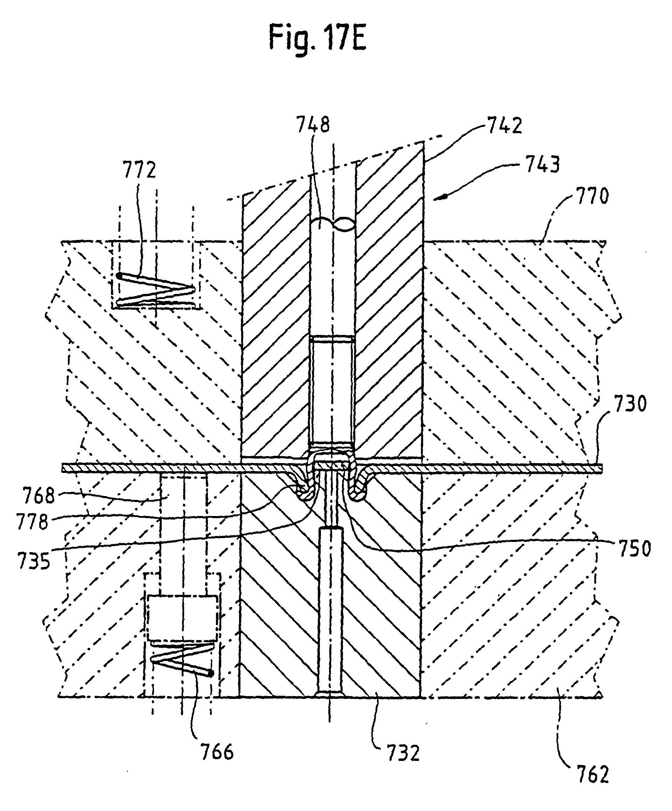

Diese Verformung setzt sich dann beim weiteren Schließen der Presse gemäß Fig. 17D fort, so daß das Stirnende 720 nunmehr ringförmig nach außen gerollt wird und greift um das untere Ende des Randbereiches 778, wodurch der Nietbördel jetzt im Entstehen ist. Während dieser weiteren Schließbewegung der Presse wird der Stanzbutzen 750 stets weiter axial in den Schaftteil 716 des Funktionselements 710 hineingeschoben. Bei der weiteren Schließbewegung der Presse fängt nun, im Zustand der Fig. 17E, die zylindrische Wand des Schaftteils 716 im Bereich innerhalb und oberhalb des Randbereiches 778 des Blechteils 730 und unterhalb des Überganges in den Schaftteil 14 an, radial nach außen gedehnt zu werden, so daß die Wandung des Kopfteils im Bereich der Stirnseite 735 des Stempelansatzes 734 sich von diesem in radialer Richtung zu entfernen beginnt. Der Stanzbutzen 750 wird weiter in Richtung auf das Schaftteil 14 des Funktionselements 710 zu verschoben.

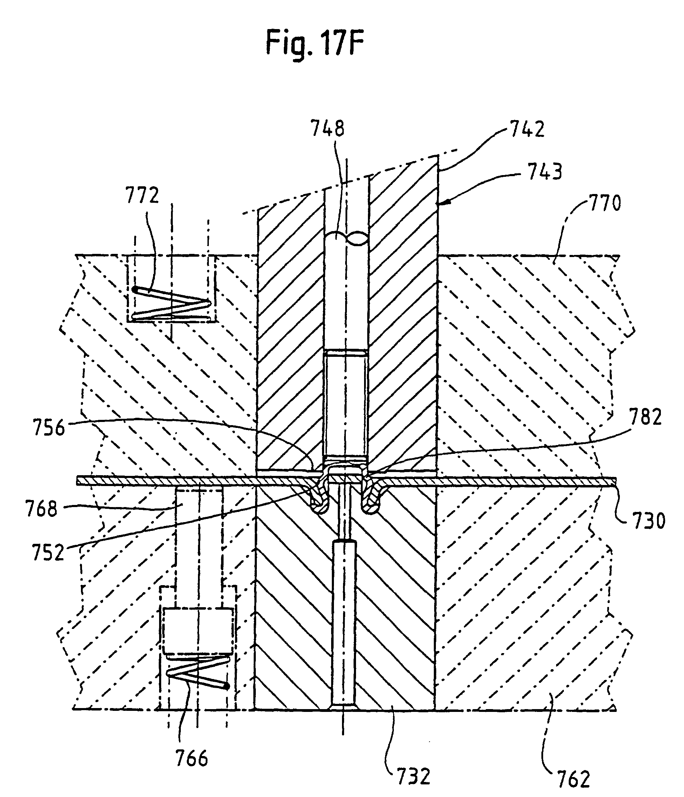

Bei einer weiteren Schließbewegung der Presse wird dann der Zustand gemäß Fig. 17F erreicht, woraus ersichtlich ist, daß ein deutlicher Knick 782 in der Wandung des Kopfteils 716 des Funktionselements 710 unmittelbar benachbart zum Stempelansatz 756 entstanden ist.

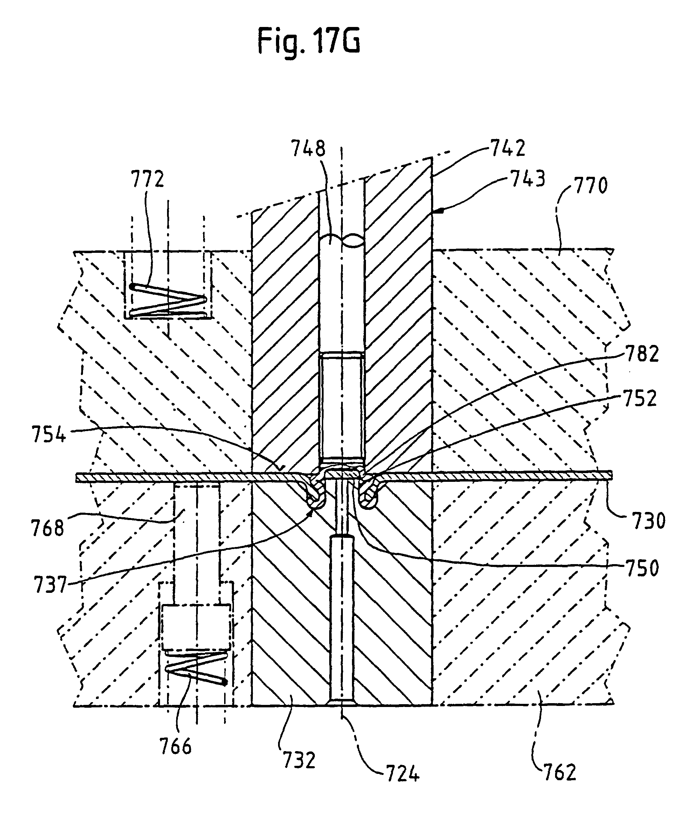

Bei der weiteren Schließbewegung der Presse wird der Bereich der Wandung des Kopfteils 16 des Funktionselements 10 unterhalb der Knickstelle 782 nunmehr zu einer Ringfaltung bzw. zu einem Ringwulst 752 ausgebildet. Die Stirnseite 754 des Außenstempels 742 drückt nun auf die Oberseite des Blechteils 730 auf. Der Stempelansatz 756 hat die Oberseite des Ringfalzes 752 nunmehr flachgedrückt, so daß diese Oberfläche geringfügig unterhalb der Ebene der Oberseite des Blechteils 730 angeordnet ist und im übrigen senkrecht zur Längsachse 724 steht. Der Stanzbutzen 750 ist nunmehr unmittelbar am Ende des Hohlraumes 718 des Kopfteils 16 des Funktionselements 10 angelangt und stützt die Ringfaltung 752 von innen ab. Im Zustand der Zeichnung gemäß Fig. 17G ist die Presse nunmehr vollständig geschlossen. Die Einbringung des Funktionselementes 710 in das Blechteil 730 ist nunmehr vollendet.

Durch die Quetschung des Ringfalzes durch den Stempelansatz 756 wird das Blechmaterial und das Material des Kopfteils 16 des Funktionselements 10 im Bereich der Nuten 739 und Nasen 741 der Matrize 732 verformt, so daß daß das Blechmaterial mit dem Material des Funktionselements hier verhakt ist, wodurch eine hochwertige Verdrehsicherung entsteht.

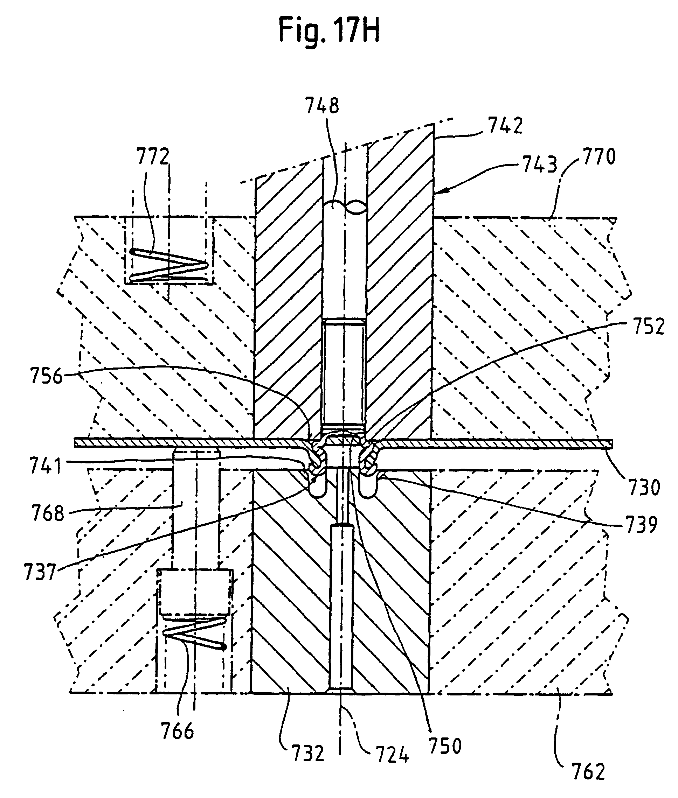

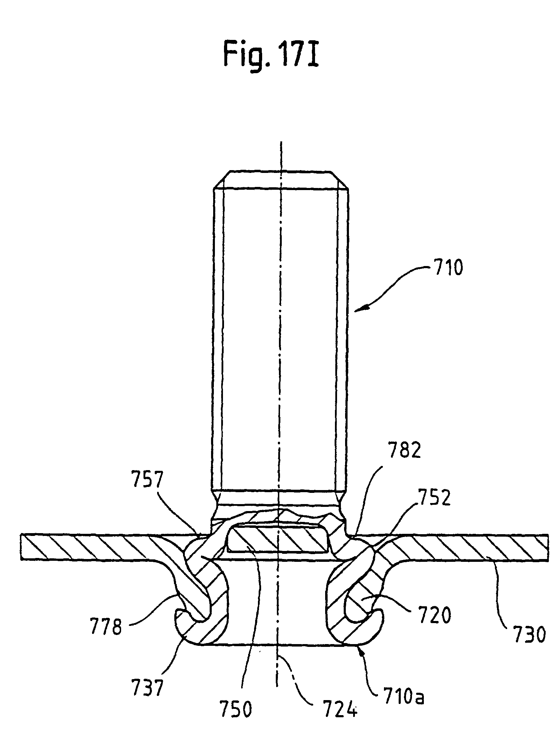

Die Presse fängt nun an, sich zu öffnen, wie in Fig. 17H gezeigt. Dabei drücken die Stößel 768 das Blechteil mit angebrachten Funktionselement vom unteren Werkzeug 762 weg und heben das Blechteil mit dem angebrachten Funktionselement aus der Matrize 732. Die weitere Öffnungsbewegung der Presse führt dann dazu, daß das Schaftteil 714 des Funktionselements 710 sich aus dem Stempel 742 entfernt. Das Blechteil mit dem daran angebrachten Funktionselement kann nunmehr aus der Presse entfernt werden und zeigt sich so, wie in der Darstellung gemäß Fig. 17I angegeben.

Man merkt, daß bei der gesamten Schließbewegung der Presse vom Zustand der Fig. 17A bis Fig. 17G und sogar auch einschließlich Fig. 17H der Innenstempel 748 und der Außenstempel 742 sich miteinander synchron bewegen. Dies kann beispielsweise dadurch erreicht werden, daß der Innenstempel 748 oberhalb des Außenstempels 742 ein Kopfteil größeren Durchmessers aufweist, der in Berührung mit dem Außenstempel 742 gelangt, so daß eine relative Bewegung dieser beiden Teile ab dann verhindert ist. Der Innenstempel 748 soll aber dennoch gegenüber dem Außenstempel 742 weiter nach oben bewegbar sein, um die Einführung der Funktionselement 710 in den Stempelkanal des Innenstempels 742 zu ermöglichen.

Fig. 18 zeigt im Detail eine mögliche Stempelanordnung 842, die anstelle der Stempelanordnung 743 gemäß Fig. 17 mit Vorteil verwendet werden kann.

Der Außenstempel 842 ist mit einer Innenbohrung 886 versehen, die koaxial zur Längsachse 824' angeordnet ist und den Innenstempel 848 verschiebbar aufnimmt. Auf der rechten Seite der Schnittzeichnung gemäß Fig. 18A ist eine Zuführpassage 888 gezeigt, über die Funktionselemente 810 von einer Zuführeinrichtung (nicht gezeigt) in den durch die Bohrung 886 gebildeten Stempelkanal hineingeführt werden können. Obwohl die in Fig. 18A gezeigten Funktionselemente 810 in etwa die Form der Funktionselemente 10 gem. Fig. 1 aufweisen, bei denen der Boden der Querwand konusförmig ausgebildet ist, kommen im Prinzip alle bisher beschriebenen Funktionselemente in Frage, vor allen die Funktionselemente 710 gem.
Fig. 15 bzw. Fig. 17. Man merkt, daß die Längsachsen 824 der einzelnen Funktionselemente parallel zur Längsachse 824' des Stempelkanals 886 stehen und daß die einzelnen Funktionselemente einander berührend aneinander aufgereiht sind. Aufgrund der Abmessung des Stempelkanals 886 kann jedoch jeweils nur ein Funktionselement 810 sich im Stempelkanal 886 befinden.

Bei der Öffnung der Presse wird der Außenstempel 843 gegenüber dem Innenstempel 848 nach unten verschoben, üblicherweise unter dem Druck einer entsprechenden Feder, und zwar bis das Stirnende 874 des Innenstempels 848 in etwa in der Höhe der oberen Begrenzung der Zuführpassage 888 gelangt, so daß ein Funktionselement 810 durch Druck in Richtung des Pfeiles 890 in den Stempelkanal 886 hineingeführt werden kann.

Der Außenstempel 843 ist in dieser Ausführungsform mehrteilig ausgebildet und besteht aus einem unteren Ringteil 892, das mittels nicht dargestellter Schrauben an einem Oberteil 894 befestigt ist. Der untere Teil 892 hat eine mittlere Öffnung 895 mit einer kreiszylindrischen Ringwand 896, die in einen konusförmigen Bereich 898 übergeht. Sowohl der kreiszylindrische Bereich 896 als auch der konusförmige Bereich 898 sind konzentrisch zur Längsachse 824' angeordnet. Der obere Teil 894 des Außenstempels 843 ist mit einer konusförmigen Vertiefung 900 versehen, die über eine Ringschulter 902 in den Stempelkanal 886 übergeht. Auch der konusförmige Bereich 900 und die Ringschulter 902 sind konzentrisch zur Längsachse 824' der Stempelanordnung angeordnet.

In dem Bereich zwischen dem oberen Teil 894 und dem unteren Teil 892 der Stempelanordnung 842 befinden sich in diesem Beispiel drei Segmente 904, die in gleichmäßigen Winkelabständen um die mittlere Längsachse 824' angeordnet sind. Die drei Segmente 904, von denen nur zwei in Fig. 18 ersichtlich sind, bilden gemeinsam eine koaxial zur Längsachse 824' angeordnete Aufnahme 905 für ein jeweiliges Funktionselement 810. Die unteren, radial nach innen gerichteten Flächen 908 der Segmente 904 sind als Segment eines Gewindezylinders ausgebildet, der komplementär zu dem Gewindezylinder 812 des Schaftteils 814 der Funktionselemente 810 gestaltet ist. Die oberen, radial nach innen gerichteten Flächen 912 der Segmente 904 bilden gemeinsam eine Passage 913 mit einem Durchmesser, der etwas kleiner ist als der Außendurchmesser des Kopfteils 816 der jeweiligen Funktionselemente 810. Die radial äußeren Flächen 914 der Segmente 904 sind als teilkonusförmige Flächen ausgebildet, die komplementär sind zu der konusförmigen Fläche 900 der entsprechenden Vertiefung des Oberteils 894 des Außenstempels 843. Die radial oberen Flächen 916 der Segmente 904 sind komplementär zu der Ringschulter 902 ausgebildet, so daß in der Stellung gemäß Fig. 18A die teilkonusförmigen Flächen 914 der Segmente 904 und die teilkreisförmigen Flächen 916 satt an den jeweils gegenüberliegenden Flächen des Außenstempels 843 anliegen, d.h. an der Oberfläche der konusförmigen Vertiefung 900 und an der Ringschulter 902.

In dieser Stellung ist die Durchgangspassage 913, die von den Segmenten 904 gebildet ist, so gestaltet, daß sie im Durchmesser kleiner ist als der Außendurchmesser des Kopfteils 16 des Funktionselement 810. Somit kann das jeweilige Funktionselement 810 zunächst nicht zwischen den Segmenten hindurchfallen, sondern wird am oberen Ende der Segmente 904 abgestützt, wie in Fig. 18A gezeigt.

Der obere Bereich der jeweiligen Segmente 904 geht über eine teilkonusförmige Fläche 920 in einen teilzylindrischen Wandteil 922 über. Die teilkonusförmigen Flächen 920 der Segmente 904 liegen in der Stellung gemäß Fig. 18A der konusförmigen Fläche 898 des Unterteils 892 der Stempelanordnung 842 gegenüber und weisen von dieser einen Abstand auf.

Die teilzylindrischen Flächen 922 der Segmente 904 stehen der teilzylindrischen Fläche 896 des Unterteils 892 der Stempelanordnung 843 gegenüber und weisen von dieser jeweils einen radialen Abstand auf.

Um sicherzugehen, daß die Segmente 904 in die Ausgangsposition gemäß Fig. 18A stets zurückkehren, sind mit Federn 926 vorgespannte Stößel 928 vorgesehen, deren Achsen 930 schräg zur Längsachse 824' der Stempelanordnung 843 und senkrecht zu der konusförmigen Fläche 898 des Unterteils 892 der Stempelanordnung 843 stehen. Aufgrund der Federvorspannung werden die Stößel 928 so gegen die unmittelbar diesen berührenden teilkonusförmigen Flächen 922 der Segmente 904 gedrückt, daß diese bei geöffneter Presse stets die Position annehmen, die in Fig. 18A gezeigt ist. Die Federvorspannung ist nicht sehr stark.

Wird nun die Presse geschlossen, so wird der Innenstempel 848 gegenüber dem Außenstempel nach unten gedrückt und und drückt dabei das jeweilige sich im Stempelkanal 886 befindliche Funktionselement 810 gegen die obere Stirnseite der Segmente 904. Aufgrund des angeschrägten Eingangs zu der Passage 913 und der entsprechend geneigten Außenfläche im Bereich der unteren Stirnseite 820 des jeweiligen Funktionselementes 810 genügt die Kraft, die auf den Innenstempel 848 ausgeübt wird, um die Segmente nach unten in axialer Richtung 824' und radial nach außen zu drücken, so daß sie die Stifte 928 nach unten drücken, bis die teilkonusförmigen Flächen 920 in Berührung mit der konusförmigen Fläche 898 des unteren Teils 892 des Außenstempels 843 geraten.

Durch die radial nach außen gerichtete Bewegung der Segmente 904 wird der Innendurchmgesser der durch diese Segmente begrenzten Passage 913 größer, so daß das jeweilige sich im Stempelkanal 886 befindliche Funktionselement unter der Kraft des Innenstempels 848 in die Passage zwischen den Segmenten 904 hineingedrückt wird. Ein Zwischenstadium dieser Bewegung ist in Fig. 18B gezeigt und diese Bewegung setzt sich anschließend fort, bis das obere, mit einem Außengewinde 812 versehene Schafteil 814 des jeweiligen Funktionselements 810 sich im unteren Bereich der Segmente 904 befindet, wobei diese dann unter der Kraft der die Stifte 928 vorspannenden Feder 926 radial nach innen und nach oben bewegen, bis die Gewindesegmente auf den radial nach innen gerichteten unteren Flächen der Segmente 904 in den Gewindezylinder 812 des Funktionselements 810 formschlüssig eingreifen. Diese Situation ist in Fig. 18C dargestellt und man merkt, daß der vordere Abschnitt des Innenstempels 848, der einen kleineren Außendurchmesser aufweist als der obere Teil des Innenstempels 848, formschlüssig innerhalb der durch die Segmente 904 gebildete Passage 913 angeordnet ist, was der Zentrierung zu Güte kommt . Das Funktionselement 810 in Fig. 18C hat nun eine Stellung erreicht, die mit der Stellung gemäß Fig. 15A vergleichbar ist und das Stanzverfahren zum Einsetzen des Elementes kann nun beginnen und läuft dann entsprechend der Figur 17 ab.

Obwohl nicht in der Figur 18 gezeigt, ist die Anordnung so getroffen, daß der Innenstempel 848 sich nicht weiter nach unten bewegen kann als in Fig. 18C gezeigt. Dies kann beispielsweise dadurch verhindert werden, daß der obere Teil des Innenstempels 848 mit einem Kopf versehen ist, der in der "tiefsten" Stellung gemäß Fig. 18C zur Anlage an den Außenteil 842 des Stempels gelangt ist. Die gesamte Kraft der Presse wird nunmehr über den Innenstempel 848 auf die Stirnseite 829 des Funktionselements 810 und über den Außenstempel 842 und die Segmente 904 an das Gewinde 812 des Funktionselements übertragen. Hierdurch wird sichergestellt, daß das Gewinde nicht beschädigt werden kann, da es formschlüssig innerhalb der komplementären Gewindeabschnitte der Segmente 904 aufgenommen ist und es wird auch sichergestellt, daß der Gewindezylinder nicht gestaucht werden kann. Sollte das Schaftteil 814 des Funktionselements hohl ausgebildet werden, so kann der zylindrische Vorsprung 930 des Innenstempels 848 entsprechend gestaltet werden und sich über eine an das Stirnende 829 des Funktionselements 810 drückende Ringschulter (nicht gezeigt) in die innere Bohrung des Schaftteils hineinerstrecken, so daß die Einpreßkräfte auf das Funktionselement 810 übertragen werden können, ohne daß eine Beschädigung dieses Elements durch Zusammendrücken der Wandung des hohlen Schaftteils zu befürchten ist, da dieses durch den verlängerten Vorsprung des Innenstempels abgestützt ist.

Es soll an dieser Stelle zum Ausdruck gebracht werden, daß die Anzahl der Segmente 904 nicht auf drei beschränkt ist. Die Mindestzahl, die erforderlich ist, um diese Ausführungsform zu realisieren ist zwei, es können aber auch drei, vier oder mehr solche Elemente zur Anwendung gelangen, wobei vorzugsweise für jedes Element ein jeweiliger Stift 928 mit Vorspannfeder 926 vorzusehen ist.

Die unteren Enden der Segmente 904 können, falls erwünscht, mit Nasen 956 versehen werden, die gemeinsam den Stempelansatz 756 gemäß Fig. 17 bilden.

Nach der Anbringung des Funktionselements 810 entsprechend der Zeichnungsfolge der Fig. 17, öffnet sich die Presse wieder, wobei der gefederte Niederhalter eine Kraft auf das Blechteil mit dem angebrachten Funktionselement ausübt, die ausreicht, um die Segmente 904 nach unten zu ziehen in die Stellung gemäß Fig. 18B, um das Schaftteil 814 freizugeben. Da die Federspannung der Feder 928 klein ist, erfolgt die Freigabe des Funktionselements bei der Öffnung der Presse, ohne das jeweilige soeben angebrachte Funktionselement 810 zu beschädigen.

Nach der Freigabe des soeben angebrachten Funktionselements 810 führt die Öffnung der Presse dazu, daß der durch Federkraft nach unten vorgespannte Außenstempel 842 nach unten gedrückt wird, während der Innenstempel 848 nach oben gezogen wird, bis er die Ausgangsposition erreicht, bei der die untere Stirnseite des Innenstempels 848 die Höhe der oberen Begrenzung der Passage 888 erreicht hat, wodurch ein neues Element in den Stempelkanal 886 durch den Druck in Pfeilrichtung 890 hineingeführt wird. Der Arbeitszyklus fängt dann erneut an mit einem neuen Blechteil und mit einem neuen Funktionselement 810, nämlich das Funktionselement, das sich nunmehr im Stempelkanal 886 befindet.

Es kann sich bei der Werkzeuganordnung um eine Station eines Folgeverbundwerkzeugs handeln, bei dem ein Blechstreifen durch mehrere Stationen zur Durchführung von mehreren Operationen hindurchgeführt wird. Die Werkzeuganordnung kann aber auch in einer Stanzpresse eingesetzt werden, die für jeden Hub nur einen einzelnen Arbeitsgang durchführt. Die Anbringung der Werkzeuganordnung an einen Roboter oder an eine andere Art von Werkzeug ist ebenfalls möglich.

Die Funktionselemente nach der vorliegenden Erfindung sind nicht nur für die Anwendung mit reinen Blechteilen gedacht, sondern können auch mit einer Reihe von weiteren Bauteilen verwendet werden, die als Verbundbauteile verstanden werden können.

Es handelt sich bei solchen Bauteilen häufig um spröde oder nachgiebige Bauteile, die aus einem Hohlräume oder Poren enthaltendem Werkstoff bestehen und häufig als Materialverbundwerkstoff vorliegen. Als Beispiel können folgende Werkstoffe genannt werden, die zur Herstellung von Bauteilen, insbesondere spröden oder nachgiebigen Bauteilen, verwendet werden, die erfindungsgemäß mit Funktionselementen bestückt werden können:

### Metallschäume

Es handelt sich hier um hochporöse Metallwerkstoffe, deren Porengröße und -verteilung im Herstellungsprozeß definiert einstellbar sind und für eine breite Palette von möglichen Anwendungen interessant sind. Solche Metallschäume bieten unter anderem für eine Vielzahl von Bauteilen Material- und Gewichtseinsparungen und somit auch Kosteneinsparungen. Sie können Aufprallenergie durch progressive Verformung aufnehmen und sind daher beispielsweise für Energie absorbierende Teile verwendbar, beispielsweise für Konstruktionsteile von Fahrzeugen, die bei Unfällen Aufprallenergie zum Schutz der Insassen aufnehmen sollen. Darüber hinaus haben sie ausgezeichnete Dämpfungseigenschaften, so daß sie Schallwellen und mechanische Schwingungen gut absorbieren bzw. abschwächen können.

Bekannt sind u.a. Metallschäume aus Aluminium und Magnesium sowie Metallschäume aus Stahl. Verschiedene Herstellungsverfahren sind bekannt, die zur Erzeugung solcher Metallschäume verwendet werden können. Beispielsweise kann Metallpulver mit einer chemischen Verbindung vermischt werden, die später bei einer thermischen Behandlung das Aufschäumen des Metalls bewirkt. Am Schmelzpunkt des Metalls wird Gas freigesetzt, das zum Schäumen führt. Es ist auf diese Weise bereits gelungen, Aluminiumschäume zu erzeugen, die einen Gasanteil von bis zu 97 % aufweisen. Auch lassen sich Stahlschäume mit diesem Verfahren herstellen. Das Verfahren ist für ein breites Spektrum von Elementen und Legierungen anwendbar. Es besteht auch die Möglichkeit, Metallstrukturen aus Hohlkugeln, beispielsweise Stahlhohlkugeln, herzustellen.

Für die Herstellung von Magnesiumschäumen mit bis zu 60 % Gasanteil ist bekannt, dünnwandige keramische Hohlkugeln in einem gießtechnischen Prozeß in eine Magnesiummatrix einzubetten, wobei auch Magensium-Legierungen zur Anwendung kommen und frei wählbar sind.

Je nach Matrixlegierung können solche Wirkstoffe fester und spröder oder aber weicher und duktiler sein als die Ausgangslegierung.

Nach Herstellung der Schäume sind diese häufig mit einer Gußhaut versehen, die entweder entfernt oder mit einem Füllmaterial geglättet werden. Schäume mit einer Gußhaut, die ggf. mit einem Füllmaterial gefüllt ist, bilden eine Art von Sandwich-Struktur.

### Sandwich-Strukturen mit Metallschäumen

Zur Erzeugung von Materialverbundstoffen in Form einer Sandwich-Struktur mit einem Kern aus einem Metallschaum können die oben beschriebenen Metallschäume mit oder ohne Gußhaut erzeugt und mit oberen und/oder unteren Decklagen bzw. aus Blech oder Kunststoff versehen werden.

Durch die Aufbringung von Schichten oder -lagen auf dem Kern können Eigenschaften wie Kratzfestigkeit, niedrige oder hohe Reibung, Korrosionsbeständigkeit sowie günstige Verschleißeigenschaften erreicht werden. Die entsprechenden Bauteile bzw. etwaige vorhandene Decklagen können mit allen bekannten Beschichtungsverfahren beschichtet werden, d.h. mit galvanischen Beschichtungen, Lackbeschichtungen oder mittels PVD-Verfahren durchgeführte Beschichtungen u.a., versehen werden. Bei der Vorsehung von Blechlagen auf einem aus Schaumstoff bestehenden Kern können die Blechlagen auf dem Metallschaumkern aufgeklebt oder gebondet werden, wozu auch Löt- und Hartlötverfahren in Frage kommen. Für Decklagen aus Kunststoff werden üblicherweise Klebstoffe verwendet, um die Anbindung an den Kern zu erreichen.

Ein anderes Verfahren zur Erzeugung von Sandwich-Strukturen besteht darin, Hohlprofile aus Metall oder Kunststoff, beispielsweise in Form von mittels Strangpressen extrudierten Profilen vollständig oder bereichsweise mit einem Metallschaumkern zu versehen. Dies kann durch das Einführen von länglichen Streifen aus Metallschaum, ggf. mit einer Oberflächenverklebung des Metallschaums an das Profil oder durch das Aufschäumen von Metall-/Schaumstoffmischungen im Hohlprofil erfolgen. Auch können offene Profile oder geformte Blechteile mit einer Einlage aus Metallschaum (Einlage aus einer Lage Metallschaum oder aus mehreren Lagen Metallschaum) versehen werden und dann mit einem Abdeckstreifen oder -profil abgedeckt werden, der bzw. das im Randbereich mit dem offenen Profil durch Schweißen, Nieten, Kleben oder anderweitig befestigt wird. Anstelle von Metallschäumen können auch Kunststoffschäume oder andere Materialien in solchen Verbundstrukturen verwendet werden. Eine konkrete Verwendung solcher, mit Metallschaum oder mehreren Füllstoffen gefüllter Profile stellt die Anwendung als B-Säule eine Kraftfahrzeugs dar, die durch die Füllung eines vorgefertigten Profils, ggf. mit anschließender Formgebung durch Biegen oder Pressen hergestellt werden kann.

Durch die abschnittsweise Füllung solcher Profile können die gewünschten mechanischen Eigenschaften eingestellt werden. Beispielsweise kann in einem Bereich die gewünschte Steifigkeit bzw. Knickfestigkeit, und in einem anderen Bereich die gewünschte Verformung, beispielsweise im Falle eines Unfalls, erreicht werden.

### Andere Sandwich-Strukturen

Es kommen auch Materialverbundstoffe, die aus einem Kern mit einer Wabenstruktur und aus oberen und/oder unteren Decklagen bestehen, in Frage, wobei die Decklagen aus Blech oder aus Kunststoffplatten bestehen können. Die Wabenstruktur kann aus Metall, aus Metallfolien oder aus Karton oder Papier oder aus Kunststoff oder aus Zellulose oder Lignozellulose bestehen.

### Werkstoffe mit Sprödbruchcharakteristik

Solche Werkstoffe umfassen u.a. Gußteile aus z.B. Magnesium, Magnesiumlegierungen und Duroplaste mit und ohne Füllstoffe. Solche Werkstoffe können ebenfalls für Bauteile verwendet werden, die erfindungsgemäß mit Funktionselementanordnungen bestückt werden.

### Weitere Bauteilmaterialien bzw. -Konstruktionen

Auch Kunststoffbauteile, Bauteile aus Holze oder Spanplatten oder dergleichen kommen für die erfindungsgemäßen Zusammenbauteile in Frage, wobei solche Werkstoffe üblicherweise als nachgiebig anzusehen sind, da sie bei den Kräften, die bei der Herstellung einer Nietverbindung herrschen, üblicherweise deutlich nachgeben.

Auch sind besondere Materialverbundwerkstoffe denkbar, die aus einer Kombination von einem oder mehreren der oben genannten Werkstoffe bestehen, beispielsweise mehrlagigen Anordnungen, die aus mehreren, aneinander gebondeten Lagen bestehen, wodurch beispielsweise dickere Bauteile oder Bauteile mit komplexeren Formen aufgebaut werden können.

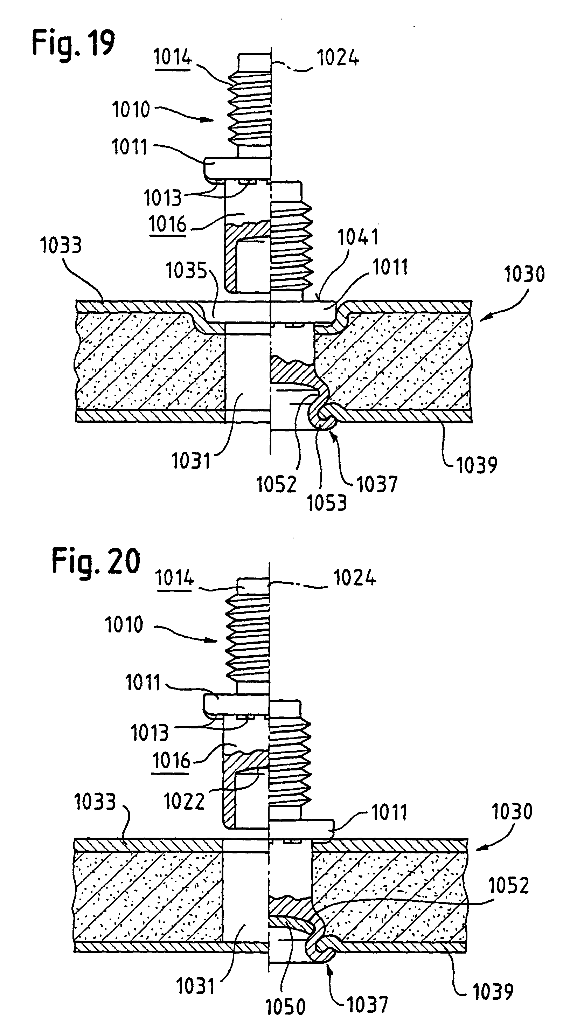

Die Figuren 19 und 20 zeigen zwei Möglichkeiten, wie ein erfindungsgemäßes Funktionselement 1010 mit einem Verbundbauteil 1030 verwendet werden kann.

Fig. 19 zeigt das Funktionselement 1010 im Ausgangszustand in einem Halbschnitt auf der linken Seite der mittleren Längsachse 1024, wobei die andere Hälfte des Funktionselementes 1010 auf der anderen Seite der mittleren Längsachse 1024 symmetrisch ausgebildet ist, mit Ausnahme des Gewindes, das natürlich mit der gezeigten Hälfte des Gewindes einen durchgehenden Gewindezylinder bildet.

Abweichend von den bisherigen Ausführungsformen ist hier, daß ein Flansch 1011 zwischen dem Schaftteil 1014 und dem Kopfteil 1016 vorgesehen ist und wie hier gezeigt bevorzugterweise Nasen 1013 trägt, die als zusätzliche Verdrehsicherung dienen. Das Flanschteil 1011 mit den Verdrehsicherungsmerkmalen 1013 kann, falls gewünscht, weggelassen werden, sorgt aber hier für eine stabilere Anbringung des Funktionselementes 1010 am Verbundbauteil 1030. Das Verbundbauteil 1030 kann eine der Ausbildungen aufweisen, die oben für Verbundbauteile angegeben ist.

Vor Anbringung des Funktionselementes wird das Verbundbauteil vorbereitet, wie auf der linken Seite der mittleren Längsachse 1024 gezeigt ist.

Man merkt, daß eine zylindrische Bohrung 1031 mit einer kreiszylindrischen Wandung im Bauteil 1030 hergestellt wurde und daß die obere Lage 1033 des Verbundbauteils 1030 zu einer sickerförmigen Vertiefung 1035 umgeformt wurde. Die Bohrung 1031 kann durch einen Bohrvorgang oder durch einen Stanzvorgang hergestellt werden, während die Sicke 1035 üblicherweise durch einen Stanzschritt hergestellt wird, beispielsweise in einer Stanzpresse. Wenn sowohl die Bohrung 1031 als auch die Sicke 1035 durch Stanzen hergestellt werden, so kann dies in einem Schritt mittels eines entsprechend geformten Stanzwerkzeuges erfolgen. Die Sicke 1035 hat eine Form, die der des Flanschteils 1011 ähnlich ist.

Bei Anbringung des Funktionselementes, welches mit Hilfe einer Matrize entsprechend der Fig. 2 erfolgen kann, ist eine formschlüssige Verbindung zwischen dem hohlen Kopfteil 1015 des Funktionselementes 1010 und der unteren Lage 1039 des Verbundbauteils 1030 entstanden, die von der Form her der der Fig. 5 sehr ähnlich ist, in dem Sinne, daß das hohle Kopfteil 1016 im Bereich seines Stirnendes zu einem Nietbördel 1037 umgeformt ist, der unterhalb der unteren Lage 1039 des Verbundbauteils 1030 zu liegen kommt und daß der Bereich des hohlen Kopfteils 1016 oberhalb dieser unteren Lage 1039 zu einem Ringfalz 1052 umgeformt ist, der mit dem Nietbördel 1037 eine U-förmige Ringnut bildet, in der der Randbereich der unteren Lage 1039, der bisher die Bohrung 1031 mit definierte, aufgenommen wurde. Man merkt aber auch, daß der Ringfalz 1052 nicht ganz so ausgeprägt ist wie der Ringflansch 52 bei der Fig. 5 Ausführungsform, was verständlich ist, da es bei dieser Ausführungsform nicht möglich ist, diesen Bereich mit einem Außenstempel zu belasten.

Außerdem fehlt bei dieser Ausführungsform ein Stanzbutzen, da das Verbundbauteil 1030 hier vorgebohrt wird. Mit anderen Worten wird das in Fig. 19 untere Stirnende des Funktionselementes 1010 nicht selbststanzend durch die untere Lage 1039 hindurchgestossen. Da hier kein Stanzbutzen ausgebildet wird, ist es nicht erforderlich, die gerundete Ringeinsenkung oder Rollfläche der Matrize so tief auszuführen, wie bei 36 in Fig. 2 gezeigt.

Da das Verbundbauteil 1030 von unten auf einer Matrize abgestützt wird, und das Funktionselement 1010 durch einen Stempel von oben nach unten gedrückt wird, werden die zur Verdrehsicherung vorgesehenen Nasen und Merkmale 1013 in die Oberseite der oberen Lage des Verbundbauteils 1030 im Bereich der Sicke 1035 hineingedrückt. Nach der Anbringung des Funktionselementes ist die Oberseite 1041 des Flanschteils 1011 in etwa bündig mit der in Fig. 19 oberen Seite der oberen Lage 1033 des Verbundbauteils 1030. Das Kernmaterial des Verbundbauteils 1030 ist im Bereich des Ringfalzes 1052 und der U-förmigen Ringnut 1053 entsprechend dem Verlauf des Ringfalzes und der unteren Lage 1039 verformt.

Wenn ein Flanschteil 1011 nicht vorgesehen ist, so ist eine Sicke 1035 unnötig und das vorbereitete Bauteil 1030 weist dann nur eine zylindrische Bohrung auf, wobei die kreisförmige Öffnung in der oberen Lage vorzugsweise zumindest im wesentlichen den gleichen Durchmesser aufweisen soll wie der Außendurchmesser des hohlen Kopfteils 1016.

Fig. 20 zeigt eine leicht abgewandelte Ausführungsform im Vergleich zu Fig. 19. Hier wird zwar das Bauteil 1030 ebenfalls durch die Herstellung einer zylindrischen Bohrung 1031 vorbereitet, diese Bohrung 1031 hört jedoch unmittelbar oberhalb der unteren Lage 1039 des Verbundbauteils 1030 auf. Auch wird hier keine Sicke 1035 in die obere Lage 1033 des Verbundbauteils 1030 hergestellt. Der Durchmesser der Bohrung 1031 entspricht, wie auch bei der Ausführungsform gemäß Fig. 19, zumindest im wesentlichen dem Außendurchmesser des hohlen Kopfteils 1016 des Funktionselementes 1010, das hier identisch ist mit dem entsprechenden Element 1010 der Fig. 19.

Bei dieser Ausführungsform ist das untere Stirnende des Funktionselementes 1010 mit Stanzmerkmalen ausgestattet, die in Zusammenarbeit mit einer entsprechenden Matrize (in etwa entsprechend der Matrize der Fig. 2) zu dem Ausstanzen eines Stanzbutzens 1050 führt, wobei aufgrund eines höher angeordneten, mittleren Pfostens der Matrize dieser Stanzbutzen bis im Bereich der Querwand 1022 des hohlen Kopfteils 1016 in dieses hohle Kopfteil 1016 hineingedrückt wird.

Die formschlüssige Verbindung im Bereich des Nietbördels 1037 gestaltet sich dann im Prinzip identisch zu der Ausbildung gemäß Fig. 19, nur wird der Ringfalz 1052 hier auf der Innenseite zusätzlich durch den Stanzbutzen 1050 abgestützt.

Da keine Sicke 1035 in der oberen Lage 1033 des Verbundbauteils 1030 vorgesehen ist, liegt die Unterseite des Flanschteils 1011 des Funktionselementes auf der Oberseite der oberen Lage 1033 an. Dieses wird nur geringfügig eingedrückt, vor allem im Bereich der Verdrehsicherungsnasen-Merkmale 1013, um eben die erforderliche Verdrehsicherung zu erzeugen. Bei beiden Beispielen steht das Verbundbauteil 1030 unter einer gewissen Kompression zwischen dem Flanschteil 1011 und dem Nietbördel 1037, was der Qualität und Stabilität der Verbindung zugute kommt.

Die hier beschriebenen Funktionselemente können zum Beispiel aus allen Materialien hergestellt werden, die die Festigkeitsklasse 5.6 erreichen. Solche Metallwerkstoffe sind üblicherweise Kohlenstoffstähle mit 0,15 bis 0,55 % Kohlenstoffgehalt.

Bei allen Ausführungsformen können auch als Beispiel für den Werkstoff der Funktionselemente alle Materialien genannt werden, die im Rahmen der Kaltverformung die Festigungswerte der Klasse 8 gemäß Isostandard erreichen, beispielsweise eine 35B2-Legierung gemäß DIN 1654. Die so gebildeten Befestigungselemente eigenen sich u.a. für alle handelsüblichen Stahlwerkstoffe für ziehfähige Blechteile wie auch für Aluminium oder deren Legierungen. Auch können Aluminiumlegierungen, insbesondere solche mit hoher Festigkeit, für die Funktionselemente benutzt werden, z.B. AlMg5.

Die bisher durchgeführten Versuche haben gezeigt, daß bei Anwendung des Materials 35B2 das Verhältnis der radialen Wanddicke des Kopfteils zum Außendurchmesser des Kopfteils im Bereich zwischen 0,15 bis 0,2 liegt. Höhere Werte sind anstrebbar, da sie die Bruchkräfte bzw. Ausziehkräfte erhöhen. Es muß jedoch sichergestellt werden, daß die Einpreßkräfte nicht zu einer unzulässigen Deformation führen. Bei einem Durchmesser von 8 mm hat eine radiale Wanddicke von 1,2 mm sich als günstig erwiesen.

## Patentansprüche

1. Funktionselement (10, 110, 210, 310, 510, 610, 710, 810), insbesondere Bolzenelement, bestehend aus einem Schaftteil (14, 114, 214, 314, 414, 514, 614, 714, 814) und einem für eine Nietverbindung mit einem Tafelelement, insbesondere einem Blechteil (30, 130, 230, 430, 630, 730) ausgelegten Kopfteil (16, 116, 216, 316, 416, 516, 616, 716, 816), wobei mindestens das Kopfteil hohl ausgebildet ist und zumindest im wesentlichen den gleichen Außendurchmesser wie das Schaftteil aufweist, **dadurch gekennzeichnet, daß** das dem Schaftteil (14, 114, 214, 314, 414, 514, 614, 714, 814) abgewandte Stirnende (20, 120, 220, 320, 420, 520, 620, 720, 820) des Kopfteils (16, 116, 216, 316, 416, 516, 616, 716, 816) in an sich bekannter Weise mit Stanz- und Nietmerkmalen ausgebildet ist, und daß die Länge des hohlen Kopfteils (16, 116, 216, 316, 416, 516, 716, 816) mindestens so bemessen ist, daß seine Länge die Länge . eines auf der dem Schaftteil (14, 114, 214, 314, 414, 514, 614, 714,814) abgewandten Seite eines Blechteils (30, 130, 230, 430, 630, 730) ausgebildeten Nietbördels (37, 137, 237, 437, 637, 737) plus die Dicke des Blechteils und die doppelte Länge des Radius eines auf der dem Schaftteil (14, 114, 214, 314, 414, 514, 614, 714) zugewandten Seite des Blechteils ausgebildeten Ringfalzes (52, 152, 252, 452, 652, 752) beträgt.

2. Funktionselement (10, 110, 210, 310, 410, 510, 610) nach Anspruch 1, **dadurch gekennzeichnet, daß** das Stirnende (20, 120, 220, 320, 420, 520, 620) des hohlen Kopfteils (16, 116, 216, 316, 416, 516, 616) von der kreiszylindrischen Mantelfläche in eine abgerundete Stoß- und Ziehkante (28, 628) übergeht und innen eine konische Schneidfläche (26, 426, 626) aufweist.

3. Funktionselement (10, 110, 210, 310, 410, 510, 610, 710, 810) nach einem der vorhergehenden Ansprüche, **dadurch gekennzeichnet, daß** der Innenraum (18, 118, 218, 318, 418, 518, 618, 718, 818) des hohlen Kopfteils (16, 116, 216, 316, 416, 516, 616, 716, 816) zumindest im wesentlichen kreiszylindrisch ausgebildet ist.

4. Funktionselement (310, 410, 510, 610) nach einem der vorhergehenden Ansprüche, **dadurch gekennzeichnet, daß** auch das Schaftteil (314, 414, 514, 614) hohl ausgebildet ist.

5. Funktionselement (10, 110, 210, 310, 610, 710, 810) nach einem der vorhergehenden Ansprüche, **dadurch gekennzeichnet, daß** das Schaftteil (14, 114, 214, 314, 614, 714, 814) mit einem Außengewinde (12, 112, 212, 312, 612, 712, 812) versehen ist.

6. Funktionselement (410) nach Anspruch 4, **dadurch gekennzeichnet, daß** das hohle Schaftteil (414) mit einem Innengewinde (412) versehen ist.

7. Funktionselement (10, 110, 210, 310, 410, 510, 610, 710, 810) nach einem der vorhergehenden Ansprüche, **dadurch gekennzeichnet, daß** es als Kaltschlagteil ausgebildet ist.

8. Funktionselement (310, 410, 510, 610) nach einem der vorhergehenden Ansprüche, **dadurch gekennzeichnet, daß** es aus Rohrmaterial angefertigt wird, wobei ein etwaige vorhandenes Gewinde (312) am Schaftteil durch ein Gewindewalzverfahren oder durch ein Druckumformverfahren hergestellt ist.

9. Funktionselement (10, 110, 210, 310, 410, 510, 610, 710, 810), nach einem der Vorhergehenden Ansprüche, insbesondere Bolzenelement, **dadurch gekennzeichnet, daß** das Kopfteil (16, 116, 216, 316, 416, 516, 616, 716, 816) ohne ein Flanschteil in den Schaftteil (14, 114, 214, 314, 414, 514, 614, 714, 814) übergeht.

10. Funktionselement (1010) bestehend aus einem Schaftteil (14, 114, 214, 314, 414, 514, 614, 714, 814) und einem für eine Nietverbindung mit einem Tafelelement, insbesondere einem Blechteil (30, 130, 230, 430, 630, 730) ausgelegten Kopfteil (16, 116, 216, 316, 416, 516, 616, 716, 816), wobei mindestens das Kopfteil hohl ausgebildet ist und zumindest im wesentlichen den gleichen Außendurchmesser wie das Schaftteil aufweist, **dadurch gekennzeichnet, daß** die Länge des hohlen Kopfteils (16, 116, 216, 316, 416, 516, 716, 816) mindestens so bemessen ist, daß seine Länge die Länge eines auf der dem Schaftteil (14, 114, 214, 314, 414, 514, 614, 714,814) abgewandten Seite eines Blechteils (30, 130, 230, 430, 630, 730) ausgebildeten Nietbördels (37, 137, 237, 437, 637, 737) plus die Dicke des Blechteils und die doppelte Länge des Radius eines auf der dem Schaftteil (14, 114, 214, 314, 414, 514, 614, 714) zugewandten Seite des Blechteils ausgebildeten Ringfalzes (52, 152, 252, 452, 652, 752) beträgt, daß ein Flanschteil (1011) zwischen dem hohlen Kopfteil (1016) und dem Schaftteil (1014) vorliegt, wobei das Flanschteil (1011) wahlweise auf seiner dem Kopfteil zugewandten Seite Verdrehsicherungsmerkmale aufweisen kann, und das Flanschteil (1011) vom hohlen Kopfteil (1016) einen Abstand aufweist.

11. Verfahren zur Herstellung einer Verbindung zwischen einem Funktionselement (10, 110, 210, 310, 410, 510, 610, 710, 810) mit einem Blechteil (30, 130, 230, 430, 630, 730), wobei das Funktionselement aus einem Schaftteil (14, 114, 214, 314, 414, 514, 614, 714, 814) und einem für eine Nietverbindung mit dem Blechteil (30, 130, 230, 430, 630, 730) ausgelegten Kopfteil (16, 116, 216, 316, 416, 516, 616, 716, 816), wobei mindestens das Kopfteil hohl ausgebildet ist und zumindest im wesentlichen den gleichen Außendurchmesser wie das Schaftteil aufweist, und das dem Schaftteil (14, 114, 214, 314, 414, 514, 614, 714, 814) abgewandte Stirnende (20, 120, 220, 320, 420, 520, 620, 720, 820) des Kopfteils (16, 116, 216, 316, 416, 516, 616, 716, 816) in an sich bekannter Weise mit Stanz- und Nietmerkmalen ausgebildet ist, und in an sich bekannter Weise das Blechteil durch das Stirnende (20, 120, 220, 320, 420, 520, 620, 720, 820) des Funktionselements bei gleichzeitiger Abstützung des Blechteils (30, 130, 230, 430, 630, 730) auf einer Matrize (32) durchlocht und zur Ausbildung eines Nietbördels (37, 137, 237, 437, 637, 737) um den nach unten gezogenen Lochrand geformt wird und nach oder kurz vor Fertigstellung des Nietbördels (37, 137, 237, 437, 637, 737) das Funktionselement (10, 110, 210, 310, 410, 510, 610, 710, 810) nach unten gedrückt wird, um einen dem Schaftteil (14, 114, 214, 314, 414, 514, 614, 714, 814) zugewandten Bereich des hohlen Kopfteils (16, 116, 216, 316, 416, 516, 616, 716, 816) zu einem Ringfalz (52, 152, 252, 452, 652, 752) auszubilden, der auf der dem Nietbördel (37, 137, 237, 437, 637, 737) abgewandten und dem Schaftteil (14, 114, 214, 314, 414, 514, 614, 714, 814) zugewandten Seite des Blechteils (30, 130, 230, 430, 630, 730) anliegt.

12. Verfahren nach Anspruch 11, **dadurch gekennzeichnet, daß** nach der zumindest teilweisen Fertigstellung des Nietbördels (37, 137, 237, 437, 637) das Blechteil (30, 130, 230, 430, 630) in eine ringförmige Vertiefung (40) der Matrize (32) durch den sich ausbildenden Ringfalz (52, 152, 252, 452, 652) gedrückt wird, wobei der Durchmesser der ringförmigen Vertiefung (40) am Stirnende der Matrize größer ist als der Durchmesser des fertiggestellten Ringfalzes (52, 152, 252, 452, 652), um so eine ringförmige Vertiefung im Blechteil zu erzeugen, deren Tiefe zumindest im wesentlichen der axialen Höhe des Ringfalzes (52, 152, 252, 452, 652), d.h. zumindest im wesentlichen der doppelten Höhe der Wanddicke des hohlen Kopfteils entspricht und deren Durchmesser zumindest im wesentlichen dem Außendurchmesser des Ringfalzes (52, 152, 252, 452, 652) zuzüglich der doppelten Blechdicke entspricht.

13. Verfahren nach einem der Ansprüche 11 oder 12, **dadurch gekennzeichnet, daß** zum Durchstanzen des Blechteils (30, 130, 230, 430, 630, 730) mit einem Stempel (48) auf der dem Kopfteil abgewandten Stirnende (29,129, 229, 329, 429, 529, 629, 729, 829) des Schaftteils (14, 114, 214, 314, 414, 514, 614, 714, 814) gedrückt wird, während das Blechteil (30, 130, 230, 430, 630, 730) am Rand der Matrize (32) außerhalb der Ringvertiefung (40) abgestützt ist, so daß das Durchstanzen des Blechteils mit der Ausbildung einer Trompetenmund-artigen Vertiefung im Blechteil einhergeht, und daß nach Ausbildung des ringformigen Nietbördels (37, 137, 237, 437, 637, 737) der Stempel (48) eine zusätzliche Kraft auf das Schaftteil (14, 114, 214, 314, 414, 514, 614, 714, 814) in Längsrichtung des Funktionselementes ausübt, um den oberhalb des Blechteils angeordneten Bereich des hohlen Kopfteils (16, 116, 216, 316, 416, 516, 616, 716, 816) zu einem Ringfalz (52, 152, 252, 452, 652, 752) auszubilden und ein konzentrisch zum Stempel angeordneter Stempel (42) nach unten gedrückt wird, um den Ringfalz (52, 152, 252, 452, 652, 752) zusammenzudrücken und eine Ringfläche (57, 157, 257, 457, 657, 757) zu bilden.

14. Verfahren nach Anspruch 13, **dadurch gekennzeichnet, daß** die so gebildete Ringfläche (57, 157, 257, 457, 657, 757) senkrecht zur Längsachse (24, 124, 224, 324, 424, 524, 624, 724) des Elementes (10, 110, 210, 310, 410, 510, 610, 710, 810) steht und vorzugsweise bündig mit oder geringfügig unterhalb oder geringfügig oberhalb der Ebene des Blechteils im Bereich der Verbindung liegt.

15. Verfahren nach einem der Ansprüche 11 bis 14, **dadurch gekennzeichnet, daß** der durch den Stanzabschnitt des Kopfteils ausgebildete Stanzbutzen (50, 150, 250, 450, 650, 750) mittels eines Stempelansatzes (34) der Matrize (32) innerhalb des Nietbördels (37, 137, 237, 437, 637, 737) gezwungen wird, um die Festigkeit der Nietverbindung weiter zu erhöhen.

16. Zusammenbauteil bestehend aus einem Blechteil (30, 130, 230, 430, 630, 730) und einem Funktionselement (10, 110, 210, 310, 410, 510, 610, 710, 810) nach einem der vorhergehenden Ansprüche 1 bis 10, und nach einem der Verfahren von Anspruch 11 bis 15 hergestellt, **dadurch gekennzeichnet, daß** sich auf der dem Schaftteil (14, 114, 214, 314, 414, 514, 614, 714, 814) abgewandten Seite des Blechteils ein Nietbördel (37, 137, 237, 437, 637, 737) befindet, während auf der dem Schaftteil (14, 114, 214, 314, 414, 514, 614, 714, 814) zugewandten Seite des Blechteils (30, 130, 230, 430, 630, 730) ein Ringfalz (52, 152, 252, 452, 652, 752) sich befindet, daß das Blechteil (30, 130, 230, 430, 630, 730) im Bereich der Verbindung zum Funktionselement (10, 110, 210, 310, 410, 510, 610, 710, 810) zwischen dem Ringfalz (52, 152, 252, 452, 652, 752) und dem Nietbördel (37, 137, 237, 437, 637, 737) geklemmt ist, daß der Ringfalz (52, 152, 252, 452, 652, 752) in einer Ringvertiefung des Blechteils angeordnet ist, wobei eine dem Schaftteil (14, 114, 214, 314, 414, 514, 614, 714, 814) zugewandte Ringfläche (57,157, 257, 457, 657, 757) des Ringfalzes (52, 152, 252, 452, 652, 752) entweder geringfügig unterhalb oder geringfügig oberhalb der dem Schaftteil (14, 114, 214, 314, 414, 514, 614, 714, 814) zugewandten Seite des Bleches im Bereich der Nietverbindung angeordnet ist oder auf der gleichen Höhe wie die Seite des Blechteils (30, 130, 230, 430, 630, 730) liegt.

17. Zusammenbauteil nach Anspruch 16, **dadurch gekennzeichnet, daß** ein Stanzbutzen (50, 150, 250, 450, 650, 750) sich innerhalb des ringförmigen Nietbördels (37, 137, 237, 437, 637, 737) befindet und vorzugsweise gegen diesen drückt.

18. Zusammenbauteil nach einem der Ansprüche 16 oder 17, **dadurch gekennzeichnet, daß** es sich bei dem Blechteil um ein Verbundbauteil (1030) handelt.

19. Verfahren nach einem der Ansprüche 11-15, wobei eine Matrize (732) zur Anwendung kommt mit einer an einem Stirnende (733) vorgesehene ringförmigen Vertiefung (740) die um einen mittig angeordneten Stempelansatz (734) angeordnet ist, wobei der Stempelansatz zur Zusammenarbeit mit einem rohrförmigen Kopfteil (716) eines Funktionselements (710) ausgelegt ist, um aus einem Blechteil (730) ein Stanzbutzen (750) herauszutrennen und die ringförmige Vertiefung (740) ausgelegt ist, um den Endbereich des rohrförmigen Kopfteils (716) um den sich nach dem Heraustrennen des Stanzbutzens ausbildenden in die Vertiefung hineingedrückten Randbereich (778) des Blechteils umzulegen und dort zu einem Nietbördel (737) umzuformen, **dadurch gekennzeichnet, daß** der Stempelansatz (734) über das außerhalb der ringförmigen Vertiefung liegende Stirnende (733) der Matrize (732) hinausragt.

20. Verfahren nach einem der Ansprüche 11-15 wobei eine Matrize (732) zur Anwendung kommt mit einer an einem Stirnende (733) vorgesehene ringförmigen Vertiefung (740) die um einen mittig angeordneten Stempelansatz (734) angeordnet ist, wobei der Stempelansatz zur Zusammenarbeit mit einem rohrförmigen Kopfteil (716) eines Flmktionselements (710) ausgelegt ist, um aus einem Blechteil (730) ein Stanzbutzen (750) herauszutrennen und die ringförmige Vertiefung (740) ausgelegt ist, um den Endbereich des rohrförmigen Kopfteils (716) um den sich nach dem Heraustrennen des Stanzbutzens ausbildenden in die Vertiefung hineingedrückten Randbereich (778) des Blechteils umzulegen und dort zu einem Nietbördel (737) umzuformen, **dadurch gekennzeichnet, daß** Nuten (739) in vorzugsweise gleichmäßige Winkelabständen in das Stirnende (733) der Matrize (732) um die Vertiefung (740) herum eingearbeitet sind und vorzugsweise radial und schräg zur Längsachse (724) der Matrize angeordnet sind, wodurch Verdrehsicherungsmerkmale im Blechteil und im benachbartem Material des Kopfteils erzeugbar sind.

21. Verfahren nach einem der Ansprüche 11-15 mit einem Funktionselement (810) mit einem Formmerkmale aufweisenden Schaftteil (814) und einem Kopfteil (816), insbesondere ein Funktionselement nach einem der Ansprüche 1 bis 10, wobei eine Stempelanordnung zur Anwendung kommt,
**gekennzeichnet durch**
- einen Außenstempel (842),
- einen Innenstempel (848), der innerhalb eines Stempelkanals (886) des Außenstempels (842) in Bezug auf den Außenstempel zwischen einer Aufnahmeposition für das Funktionselement (810) und einer Einsetzposition für das Funktionselement (810) verschiebbar angeordnet ist, wobei in der Aufnahmeposition das Funktionselement vorzugsweise von der Seite in den Stempelkanal (886) einführbar ist und in der Einsetzposition das Kopfteil (816) des Funktionselements aus der Stempelanordnung (843) herausragt und
- **durch** mindestens zwei vom Außenstempel getragenen Segmente (904) die an einer inneren Seite (908) vorzugsweise Formmerkmale aufweisen, die in die Formmerkmale des Schaftteils (814) des Funktionselements eingreifen können und welche zwischen eine geöffnete Position (Fig. 18B) entfernt vom Schaftteil (814) des Funktionselements und eine geschlossene Position (Fig. 18C) in Eingriff mit den Formmerkmalen des Schaftteils (814) bewegbar sind.

22. Verfahren nach Anspruch 21
**dadurch gekennzeichnet, daß** der Außenstempel einen oberen Teil (894) und einen unteren, am oberen Teil befestigten Teil (892) aufweist, wobei eine konusförmige, konzentrisch zur Längsachse (824') der Matrize angeordnete Vertiefung (898) im unteren Teil (892) vorgesehen ist und die Segmente (904) entsprechende konusförmige Flächen (920) aufweisen, daß die Segmente durch jeweilige federvorgespannte, vorzugsweise schräg zur Langsachse (824') der Sternpelanordnung gestellten Stößel (928) nach oben in Richtung des oberen Teils (894) gegen diesen vorgespannt sind und in dieser Position mit ihren Formmerkmalen in denen (812) des unter dem Druck des Innenstempels (848) vorgedrängten Funktionselements (810) eingreifen können und daß mittels einer auf das Funktionselement ausgeübten, dieses aus dem Stempelkanal und den Segmenten herausziehenden Zugkraft die Stößel (928) zurück verdrängt werden können und sich gegen die konusförmige Vertiefung (898)des unteren Teils und dabei in die geöffnete Position zur Freigabe des Funktionselements bewegen.

23. Verfahren nach Anspruch 22
**dadurch gekennzeichnet, daß** der obere Teil (894) des Außenstempels (842) zur Zentrierung der Segmente (904) eine konusförmige Vertiefung (900) aufweist, die ebenfalls konzentrisch zur Längsachse (824') der Matrize angeordnet ist und daß die Segmente (904) weitere konusförmige Flächen (914) aufweisen, die mit dieser (900) in der geschlossenen Position in Eingriff gelangen.

## Claims

1. A functional element (10, 110, 210, 310, 510, 610, 710, 810), in particular a bolt element, consisting of a shaft part (14, 114, 214, 314, 414, 514, 614, 714, 814) and a head part (16, 116, 216, 316, 416, 516, 616, 716, 816) designed for a riveted joint to a panel element, in particular to a sheet metal part (30, 130, 230, 330, 430, 630, 730), wherein at least the head part is made hollow and has at least substantially the same outer diameter as the shaft part, **characterised in that** the end (20, 120, 220, 320, 420, 520, 620, 720, 820) of the head part (16, 116, 216, 316, 416, 516, 616, 716, 816) remote from the shaft part (14, 114, 214, 314, 414, 514, 614, 714, 814) is made in a known manner with piercing and riveting features; and **in that** the length of the hollow head part (16, 116, 216, 316, 416, 516, 716, 816) is dimensioned at least such that its length amounts to the length of a rivet flange (37, 137, 237, 437, 637, 737) formed on the side of a sheet metal part (30, 130, 230, 430, 630, 730) remote from the shaft part (14, 114, 214, 314, 414, 514, 614, 714, 814) plus the thickness of the sheet metal part and the double length of the radius of an annular fold (52, 152, 252, 452, 652, 752) formed on the side of the sheet metal part facing the shaft part (14, 114, 214, 314, 414, 514, 614, 714).

2. A functional element (10, 110, 210, 310, 410, 510, 610) in accordance with claim 1, **characterised in that** the end (20, 120, 220, 320, 420, 520, 620) of the hollow head part (16, 116, 215, 316, 416, 516, 616) merges into a rounded off punching and drawing edge (26, 628) from the circular cylindrical jacket surface and has a conical cutting face (26, 426, 626) on the inside.

3. A functional element (10, 110, 210, 310, 410, 510, 610, 710, 810) in accordance with any one of the preceding claims, **characterised in that** the inner space (18, 118, 218, 318, 418, 518, 618, 718, 818) of the hollow head part (16, 116, 216, 316, 416, 516, 616, 716, 816) is at least substantially of a circular cylindrical shape.

4. A functional element (310, 410, 510, 610) in accordance with any one of the preceding claims, **characterised in that** the shaft part (314, 414, 514, 614) is also made hollow.

5. A functional element (10, 110, 210, 310, 610, 710, 810) in accordance with any one of the preceding claims, **characterised in that** the shaft part (14, 114, 214, 314, 614, 714, 814) is provided with an external thread (12, 112, 212, 312, 612, 712, 812).

6. A functional element (410) in accordance with claim 4, **characterised in that** the hollow shaft part (414) is provided with an internal thread (412).

7. A functional element (10, 110, 210, 310, 410, 510, 610, 710, 810) in accordance with any one of the preceding claims, **characterised in that** it is made as a cold formed part.

8. A functional element (310, 410, 510, 610) in accordance with any one of the preceding claims, **characterised in that** it is made of raw material, with any thread (312) present on the shaft part being manufactured in a thread rolling process or in a compression forming process.

9. A functional element (10, 110, 210, 310, 410, 510, 610, 710, 810), in accordance with any one of the preceding claims, in particular a bolt element, **characterised in that** the head part (16, 116, 216, 316, 416, 516, 616, 716, 816) merges into the shaft part (14, 114, 214, 314, 414, 514, 614, 714, 814) without a flange part.

10. A functional element (1010), consisting of a shaft part (14, 114, 214, 314, 414, 514, 614, 714, 814) and a head part (16, 116, 216, 316, 416, 516, 616, 716, 816) designed for a riveted joint to a panel element, in particular to a sheet metal part (30, 130, 230, 330, 430, 630, 730), wherein at least the head part is made hollow and has at least substantially the same outer diameter as the shaft part, **characterised in that** the length of the hollow head part (16, 116, 216, 316, 416, 516, 616, 716, 816) is dimensioned at least such that its length amounts to the length of a rivet flange (37, 137, 237, 437, 637, 737) formed on the side of a sheet metal part (30, 130, 230, 430, 630, 730) remote from the shaft part (14, 114, 214, 314, 414, 514, 614, 714, 814) plus the thickness of the sheet metal part and the double length of the radius of an annular fold (52, 152, 252, 452, 652, 752) formed on the side of the sheet metal part facing the shaft part (14, 114, 214, 314, 414, 514, 614, 714); **in that** a flange part (1011) is present between the hollow head part (1016) and the shaft part (1014), with the flange part (1011) optionally being able to have rotational security features on its side facing the head part and the flange part (1011) has a spacing from the hollow head part (1016).

11. A method for the manufacture of a joint between a functional element (10, 110, 210, 310, 410, 510, 610, 710, 810) having a sheet metal part (30, 130, 230, 430, 630, 730), wherein the functional element consists of a shaft part (14, 114, 214, 314, 414, 514, 614, 714, 814) and a head part (16, 116, 216, 316, 416, 516, 616, 716, 816) designed for a riveted joint to the sheet metal part (30, 130, 230, 430, 630, 730), with at least the head part being made hollow and having at least substantially the same outer diameter as the shaft part, and the end (20, 120, 220, 320, 420, 520, 620, 720, 820) of the head part (16, 116, 216, 316, 416, 516, 616, 716, 816) remote from the shaft part (14, 114, 214, 314, 414, 514, 614, 714, 814) being made in a manner known per se with piercing and riveting features and the sheet metal part being pierced in a manner known per se by the end face (20, 120, 220, 320, 420, 520, 620, 720, 820) of the functional element while the sheet metal part (30, 130, 230, 430, 630, 730) is simultaneously supported on a die (32) and is formed to form a rivet flange (37, 137, 237, 437, 637, 737) around the downwardly drawn rim of the aperture and the functional element (10, 110, 210, 310, 410, 510, 610, 710, 810) is pressed downwards after or just before completion of the rivet flange (37, 137, 237, 437, 637, 737) to make the region of the hollow head part (16, 116, 216, 316, 416, 516, 616, 716, 816) facing the shaft part (14, 114, 214, 314, 414, 514, 614, 714, 814) into an annular fold (52, 152, 252, 452, 652, 752) which contacts the side of the sheet metal part (30, 130, 230, 430, 630, 730) remote from the rivet flange (37, 137, 237, 437, 637, 737) and facing the shaft part (14, 114, 214, 314, 414, 514, 614, 714, 814).

12. A method in accordance with claim 11, **characterised in that** after the at least partial completion of the rivet flange (37, 137, 237, 437, 637), the sheet metal part (30, 130, 230, 430, 630) is pressed into an annular recess (40) of the die (32) by the annular fold (52, 152, 252, 452, 652) which is formed, with the diameter of the annular recess (40) at the end of the die being greater than the diameter of the completed annular fold (52, 152, 252, 452, 652) so as to generate an annular recess in the sheet metal part with a depth which corresponds at least substantially to the axial height of the annular fold (52, 152, 252, 452, 652), i.e. at least substantially to double the height of the wall thickness of the hollow head part, and with a diameter which corresponds at least substantially to the outer diameter of the annular fold (52, 152, 252, 452, 652) plus double the sheet metal thickness.

13. A method in accordance with claim 11 or claim 12, **characterised in that** pressure is exerted by a plunger (48) on the end (29, 129, 229, 329, 429, 529, 629, 729, 829) of the shaft part (14, 114, 214, 314, 414, 514, 614, 714, 814) remote from the head part to pierce the sheet metal part (30, 130, 230, 430, 630, 730), while the sheet metal part (30, 130, 230, 430, 630, 730) is supported at the rim of the die (32) outside the annular recess (40) so that the piercing of the sheet metal part is accompanied by the formation of a trumpet-like recess in the sheet metal part and **in that** after the annular rivet flange (37, 137, 237, 437, 637, 737) has been formed, the plunger (48) exerts an additional force on the shaft part (14, 114, 214, 314, 414, 514, 614, 714, 814) in the longitudinal direction of the functional element so as to form the region of the hollow head part (16, 116, 216, 316, 416, 516, 616, 716, 816) arranged above the sheet metal part into an annular fold (52, 152, 252, 452, 652, 752) and **in that** a plunger (42) arranged concentrically to the plunger is pressed downwards so as to compress the annular fold (52, 152, 252, 452, 652, 752) and to form an annular face (57, 157, 257, 457, 657, 757).

14. A method in accordance with claim 13, **characterised in that** the annular face (57, 157, 257, 457, 657, 757) formed in this way is perpendicular to the longitudinal axis (24, 124, 224, 324, 424, 524, 624, 724) of the member (10, 110, 210, 310, 410, 510, 610, 710, 810) and is preferably flush with or slightly below or slightly above the plane of the sheet metal part in the region of the joint.

15. A method in accordance with any one of the claims 11 to 14, **characterised in that** the panel slug (50, 150, 250, 450, 650, 750) formed by the piercing section of the head part is forced inside the rivet flange (37, 137, 237, 437, 637, 737) by a plunger projection (34) of the die (32) in order to further increase the strength of the riveted joint.

16. A component assembly comprising a sheet metal part (30, 130, 230, 430, 630, 730) and a functional element (10, 110, 210, 310, 410, 510, 610, 710, 810) in accordance with any one of the preceding claims 1 to 10, and manufactured in accordance with any one of the methods of claims 11 to 15, **characterised in that** a rivet flange (37, 137, 237, 437, 637, 737) is located on the side of the sheet metal part remote from the shaft part (14, 114, 214, 314, 414, 514, 614, 714, 814), while an annular fold (52, 152, 252, 452, 652, 752) is located on the side of the sheet metal part (30, 130, 230, 430, 630, 730) facing the shaft part (14, 114, 214, 314, 414, 514, 614, 714, 814); **in that** the sheet metal part (30, 130, 230,430, 630, 730) is clamped between the annular fold (52, 152, 252, 452, 652, 752) and the rivet flange (37, 137, 237, 437, 637, 737) in the region of the joint to the functional element (10, 110, 210, 310, 410, 510, 610, 710, 810); **in that** the annular fold (52, 152, 252, 452, 652, 752) is arranged in an annular recess of the sheet metal part, with an annular face (57, 152, 257, 457, 657, 757) of the annular fold (52, 152, 252, 452, 652, 752) facing the shaft part (14, 114, 214, 314, 414, 514, 614, 714, 814) being arranged either slightly below or slightly above the side of the sheet metal facing the shaft part (14, 114, 214, 314, 414, 514, 614, 714, 814) in the region of the riveted joint, or being at the same height as the side of the sheet metal part (30, 130, 230,.430, 630, 730).

17. A component assembly in accordance with claim 16, **characterised in that** a panel slug (50, 150, 250, 450, 650, 750) is located inside the annular rivet flange (37, 137, 237, 437, 637, 737) and preferably presses against this.

18. A component assembly in accordance with any one of the claims 16 or 17, **characterised in that** the sheet metal part is a composite component (1030).

19. A method in accordance with any one of claims 11 - 15, wherein a die (732) is used having an annular recess (740) provided on one end face (733) and arranged around a centrally disposed plunger projection (734), with the plunger projection being designed to cooperate with a tubular head part (716) of a functional element (710) in order to remove a panel slug (750) from a sheet metal part (730) and with the annular recess (740) being designed to move the end region of the tubular head part (716) around the rim region (778) of the sheet metal part which is pressed into the recess formed after the removal of the panel slug and to form it there into a rivet flange (737), **characterised in that** the plunger projection (734) projects beyond the end face (733) of the die (732) lying outside the annular recess.

20. A method in accordance with any one of claims 11 - 15, wherein a die (732) is used having an annular recess (740) provided on one end (733) and arranged around a centrally disposed plunger projection (734), with the plunger projection being designed to cooperate with a tubular head part (716) of a functional element (710) in order to remove a panel slug (750) from a sheet metal part (730) and with the annular recess (740) being designed to move the end region of the tubular head part (716) around the rim region (778) of the sheet metal part which is pressed into the recess formed after the removal of the panel slug and to form it there into a rivet flange (737), **characterised in that** grooves (739) are worked into the end face (733) of the die (732) around the recess (740) at preferably equal angular intervals and are preferably arranged radially and inclined to the longitudinal axis (724) of the die, whereby rotational security features can be generated in the sheet metal part and in the adjacent material of the head part.

21. A method in accordance with any one of claims 11-15 having a functional element (810) having a shaft part (814) with form features and a head part (816), in particular a functional element in accordance with any one of the claims 1 to 10, wherein a plunger arrangement is used, **characterised by**
- an outer plunger (842);
- an inner plunger (848) which is arranged displaceably with respect to the outer plunger within a plunger passage (886) of the outer plunger (842) between a receiving position for the functional element (810) and an insertion position for the functional element (810), with the functional element being able to be inserted into the plunger passage (886) when in the receiving position, preferably from the side, and with the head part (816) of the functional element projecting out of the plunger arrangement (843) when in the insertion position; and
- by at least two segments (904) supported by the outer plunger which preferably have form features on one inner side (908) which can engage into the form features of the shaft part (814) of the functional element and which are movable between an open position (Fig. 18B) remote from the shaft part (814) of the functional element and a closed position (Fig. 18C) in engagement with the form features of the shaft part (814).

22. A method in accordance with claim 21, **characterised in that** the outer plunger has an upper part (894) and a lower part (892) fastened to the upper part, with a conical recess (898) arranged concentrically to the longitudinal axis (824') of the die being provided in the lower part (892) and the segments (904) having corresponding conical surfaces (920); **in that** the segments are biased in each case upwardly in the direction of the upper part (894) against said upper part (894) by spring-biased tappets (928) preferably set obliquely to the longitudinal axis (824') of the plunger arrangement, with their form features being able to engage in this position in those (812) of the functional element (810) pushed forward under the pressure of the inner plunger (848); and **in that** the tappets (928) can be urged rearwardly by means of a drawing force exerted on the functional element and drawing it out of the plunger passage and the segments and move against the conical recess (898) of the lower part and thus into the open position to release the functional element.

23. A method in accordance with claim 22, **characterised in that** the upper part (894) of the outer plunger (842) has a conical recess (900), which is also arranged concentrically to the longitudinal axis (824') of the die, to centre the segments (904); and **in that** the segments (904) have further conical surfaces (914) which come into engagement with said conical recess (900) in the closed position.

## Revendications

1. Élément fonctionnel (10, 110, 210, 310, 510, 610, 710, 810), en particulier élément formant goujon, constitué par une partie de tige (14, 114, 214, 314, 414, 514, 614, 714, 814) et par une partie de tête (16, 116, 216, 316, 416, 516, 616, 716, 816) conçue pour une jonction rivetée avec un élément formant panneau, en particulier avec une pièce en tôle (30, 130, 230, 430, 630, 730), dans lequel au moins la partie de tête est réalisée creuse et présente au moins sensiblement le même diamètre extérieur que la partie de tige, **caractérisé en ce que** l'extrémité frontale (20, 120, 220, 320, 420, 520, 620, 720, 820), détournée de la partie de tige (14, 114, 214, 314, 414, 514, 614, 714, 814), de la partie de tête (16, 116, 216, 316, 416, 516, 616, 716, 816) est réalisée de façon connue en soi avec des caractéristiques de poinçonnage et de rivetage, et **en ce que** la longueur de la partie de tête creuse (16, 116, 216, 316, 416, 516, 616, 716, 816) est dimensionnée au moins de telle sorte que sa longueur s'élève à la longueur d'un rebord de rivetage (37, 137, 237, 437, 637, 737) réalisé sur le côté d'une pièce en tôle (30, 130, 230, 430, 630, 730) détourné de la partie de tige (14, 114, 214, 314, 414, 514, 614, 714, 814), additionné de l'épaisseur de la pièce en tôle et du double de la longueur du rayon d'une feuillure annulaire (52, 152, 252, 452, 652, 752) réalisée sur le côté de la pièce en tôle tourné vers la partie de tige ( 14, 114, 214, 314, 414, 514, 614, 714).

2. Élément fonctionnel (10, 110, 210, 310, 410, 510, 610) selon la revendication 1, **caractérisé en ce que** l'extrémité frontale (20, 120, 220, 320, 420, 520, 620) de la partie de tête creuse (16, 116, 216, 316, 416, 516, 616) se transforme à partir de la surface enveloppe cylindrique à base circulaire en une arête de jointure et d'emboutissage arrondie (28, 628) et présente à l'intérieur une surface de coupe conique (26, 426, 626).

3. Élément fonctionnel (10, 110, 210, 310, 410, 510, 610, 710, 810) selon l'une des revendications précédentes, **caractérisé en ce que** le volume intérieur (18, 118, 218, 318, 418, 518, 618, 718, 818) de la partie de tête creuse (16, 116, 216, 316, 416, 516, 616, 716, 816) est réalisée au moins sensiblement sous forme cylindrique à base circulaire.

4. Élément fonctionnel (310, 410, 510, 610) selon l'une des revendications précédentes, **caractérisé en ce que** la partie de tige (314, 414, 514, 614) est également réalisée creuse.

5. Élément fonctionnel (10, 110, 210, 310, 610, 710, 810) selon l'une des revendications précédentes, **caractérisé en ce que** la partie de tige (14, 114, 214, 314, 614, 714, 814) est pourvue d'un filetage (12, 112, 212, 312, 612, 712, 812).

6. Élément fonctionnel (410) selon la revendication 4, **caractérisé en ce que** la partie de tige creuse (414) est pourvue d'un taraudage (412).

7. Élément fonctionnel (10, 110, 210, 310, 410, 510, 610, 710, 810) selon l'une des revendications précédentes, **caractérisé en ce qu'**il est réalisé sous forme de pièce frappée à froid.

8. Élément fonctionnel (310, 410, 510, 610) selon l'une des revendications précédentes, **caractérisé en ce qu'**il est fabriqué en matériau tubulaire, un pas de vis (312) éventuellement présent sur la partie de tige étant réalisé par un procédé de galetage ou par un procédé de déformation sous pression.

9. Élément fonctionnel (10, 110, 210, 310, 410, 510, 610, 710, 810) selon l'une des revendications précédentes, en particulier élément formant goujon, **caractérisé en ce que** la partie de tête (16, 116, 216, 316, 416, 516, 616, 716, 816) se transforme sans bride en la partie de tige (14, 114, 214, 314, 414, 514, 614, 714, 814).

10. Élément fonctionnel (1010) constitué par une partie de tige (14, 114, 214, 314, 414, 514, 614, 714, 814) et par une partie de tête (16, 116, 216, 316, 416, 516, 616, 716, 816) conçue pour une jonction rivetée avec un élément formant panneau, en particulier avec une pièce en tôle (30, 130, 230, 430, 630, 730), dans lequel au moins la partie de tête est réalisée creuse et présente au moins sensiblement le même diamètre extérieur que la partie de tige, **caractérisé en ce que** la longueur de la partie de tête creuse (16, 116, 216, 316, 416, 516, 616, 716, 816) est dimensionnée au moins de telle sorte que sa longueur s'élève à la longueur d'un rebord de rivetage (37, 137, 237, 437, 637, 737) réalisé sur le côté d'une pièce en tôle (30, 130, 230, 430, 630, 730) détourné de la partie de tige (14, 114, 214, 314, 414, 514, 614, 714, 814), additionnée de l'épaisseur de la pièce en tôle et du double de la longueur du rayon d'une feuillure annulaire (52, 152, 252, 452, 652, 752) réalisée sur le côté de la pièce en tôle tourné vers la partie de tige (14, 114, 214, 314, 414, 514, 614, 714), **en ce qu'**un élément de bride (1011) se présente entre la partie de tête creuse (1016) et la partie de tige (1014), l'élément de bride (1011) pouvant présenter au choix des caractéristiques anti-rotation sur son côté tourné vers la partie de tête, et l'élément de bride (1011) présentant une distance par rapport à la partie de tête creuse (1016).

11. Procédé pour réaliser une jonction entre un élément fonctionnel (10, 110, 210, 310, 410, 510, 610, 710, 810) avec une pièce en tôle (30, 130, 230, 430, 630, 730), l'élément fonctionnel étant constitué par une partie de tige (14, 114, 214, 314, 414, 514, 614, 714, 814) et par une partie de tête (16, 116, 216, 316, 416, 516, 616, 716, 816) conçue pour une jonction rivetée avec la pièce en tôle (30, 130, 230, 430, 630, 730), dans lequel au moins la partie de tête est réalisée creuse et présente au moins sensiblement le même diamètre extérieur que la partie de tige, et l'extrémité frontale (20, 120, 220, 320, 420, 520, 620, 720, 820), détournée de la partie de tige (14, 114, 214, 314, 414, 514, 614, 714, 814), de la partie de tête (16, 116, 216, 316, 416, 516, 616, 716, 816) est réalisée de façon connue en soi avec des caractéristiques de poinçonnage et de rivetage, et la pièce en tôle est percée de façon connue en soi par l'extrémité frontale (20, 120, 220, 320, 420, 520, 620, 720, 820) de l'élément fonctionnel avec appui simultané de la pièce en tôle (30, 130, 230, 430, 630, 730) sur une matrice (32) et est déformée autour du bord perforé tiré vers le bas pour réaliser un rebord de rivetage (37, 137, 237, 437, 637, 737), et après ou peu avant la finition du rebord de rivetage (37, 137, 237, 437, 637, 737) l'élément fonctionnel (10, 110, 210, 310, 410, 510, 610, 710, 810) est poussé vers le bas pour transformer une zone, tournée vers la partie de tige (14, 114, 214, 314, 414, 514, 614, 714, 814), de la partie de tête creuse (16, 116, 216, 316, 416, 516, 616, 716, 816) en une feuillure annulaire (52, 152, 252, 452, 652, 752) qui s'appuie sur le côté de la pièce en tôle (30, 130, 230, 430, 630, 730) détourné du rebord de rivetage (37, 137, 237, 437, 637, 737) et tourné vers la partie de tige (14, 114, 214, 314, 414, 514, 614, 714, 814).

12. Procédé selon la revendication 11, **caractérisé en ce qu'**après la finition au moins partielle du rebord de rivetage (37, 137, 237, 437, 637), la pièce en tôle (30, 130, 230, 430, 630) est enfoncée dans un renfoncement annulaire (40) de la matrice (32) par la feuillure annulaire qui se forme (52, 152, 252, 452, 652), le diamètre du renfoncement annulaire (40) à l'extrémité frontale de la matrice étant supérieur au diamètre de la feuillure annulaire finie (52, 152, 252, 452, 652), afin de réaliser ainsi un renfoncement annulaire dans la pièce en tôle, dont la profondeur correspond au moins sensiblement à la hauteur axiale de la feuillure annulaire (52, 152, 252, 452, 652), c'est-à-dire au moins sensiblement au double de la hauteur de l'épaisseur de paroi de la partie de tête creuse, et dont le diamètre correspond au moins sensiblement au diamètre extérieur de la feuillure annulaire (52, 152, 252, 452, 652) additionné du double de l'épaisseur de la tôle.

13. Procédé selon l'une ou l'autre des revendications 11 et 12, **caractérisé en ce que** pour poinçonner la pièce en tôle (30, 130, 230, 430, 630, 730), un poinçon (48) est pressé sur l'extrémité frontale (29, 129, 229, 329, 429, 529, 629, 729, 829) de la partie de tige (14, 114, 214, 314, 414, 514, 614, 714, 814) pendant que la pièce en tôle (30, 130, 230, 430, 630, 730) est supportée au niveau de la bordure de la matrice (32) à l'extérieur du renfoncement annulaire (40), de sorte que le poinçonnage de la pièce en tôle est accompagné de la réalisation d'un renfoncement en forme d'embouchure de trompette dans la pièce en tôle, et **en ce qu'**après réalisation du rebord de rivetage annulaire (37, 137, 237, 437, 637, 737), le poinçon (48) exerce une force supplémentaire sur la partie de tige (14, 114, 214, 314, 414, 514, 614, 714, 814) en direction longitudinale de l'élément fonctionnel, afin de transformer la zone, agencée au-dessus de la pièce en tôle, de la partie de tête creuse (16, 116, 216, 316, 416, 516, 616, 716, 816) en une feuillure annulaire (52, 152, 252, 452, 652, 752), et un poinçon (42) agencé concentriquement par rapport au poinçon est poussé vers le bas, afin d'écraser la feuillure annulaire (52, 152, 252, 452, 652, 752) et de former une surface annulaire (57, 157, 257, 457, 657, 757).

14. Procédé selon la revendication 13, **caractérisé en ce que** la surface annulaire ainsi formée (57, 157, 257, 457, 657, 757) est perpendiculaire à l'axe longitudinal (24, 124, 242, 324, 424, 524, 624, 724) de l'élément (10, 110, 210, 310, 410, 510, 610, 710, 810) et se trouve de préférence en affleurement avec le plan de la pièce en tôle, ou légèrement au-dessous de celui-ci ou légèrement au-dessus de celui-ci, dans la zone de la jonction.

15. Procédé selon l'une des revendications 11 à 14, **caractérisé en ce que** la pastille de poinçonnage (50, 150, 250, 450, 650, 750) réalisée à travers le tronçon poinçonné de la partie de tête est forcée au moyen d'un talon de poinçon (34) de la matrice (32) à l'intérieur du rebord de rivetage (37, 137, 237, 437, 637, 737), afin d'augmenter davantage la solidité de la jonction rivetée.

16. Pièce assemblée constituée par une pièce en tôle (30, 130, 230, 430, 630, 730) et par un élément fonctionnel (10, 110, 210, 310, 410, 510, 610, 710, 810) selon l'une des revendications précédentes 1 à 10, réalisé par un procédé selon l'une des revendications 11 à 15, **caractérisée en ce qu'**un rebord de rivetage (37, 137, 237, 437, 637, 737) se trouve sur le côté de la pièce en tôle détourné de la partie de tige (14, 114, 214, 314, 414, 514, 614, 714, 814), tandis qu'une feuillure annulaire (52, 152, 252, 452, 652, 752) se trouve sur le côté de la pièce en tôle (30, 130, 230, 430, 630, 730) tourné vers la partie de tige (14, 114, 214, 314, 414, 514, 614, 714, 814), **en ce que** la pièce en tôle (30, 130, 230, 430, 630, 730) est serrée dans la zone de la jonction avec l'élément fonctionnel (10, 110, 210, 310, 410, 510, 610, 710, 810) entre la feuillure annulaire (52, 152, 252, 452, 652, 752) et le rebord de rivetage (37, 137, 237, 437, 637, 737), **en ce que** la feuillure annulaire (52, 152, 252, 452, 652, 752) est agencée dans un renfoncement annulaire de la pièce en tôle, une surface annulaire (57, 157, 257, 357, 457, 657, 757), tournée vers la partie de tige (14, 114, 214, 314, 414, 514, 614, 714, 814), de la feuillure annulaire (52, 152, 252, 452, 652, 752) étant agencée soit légèrement au-dessous soit légèrement au-dessus du côté de la tôle tourné vers la partie de tige (14, 114, 214, 314, 414, 514, 614, 714, 814) dans la zone de la jonction rivetée, soit encore à la même hauteur que le côté de la pièce en tôle (30, 130, 230, 430, 630, 730).

17. Pièce assemblée selon la revendication 16, **caractérisée en ce qu'**une pastille de poinçonnage (50, 150, 250, 450, 650, 750) se trouve à l'intérieur du rebord de rivetage annulaire (37, 137, 237, 437, 637, 737) et s'applique de préférence contre celui-ci.

18. Pièce assemblée selon l'une ou l'autre des revendications 16 et 17, **caractérisée en ce que** la pièce en tôle est une pièce structurelle composite (1030).

19. Procédé selon l'une des revendications 11 à 15, dans lequel on utilise une matrice (732) présentant un renfoncement annulaire (740) prévu à une extrémité frontale (733) et ménagé autour d'un talon de poinçon (734) agencé au centre, le talon de poinçon étant conçu pour coopérer avec une partie de tête tubulaire (716) d'un élément fonctionnel (710), afin de séparer une pastille de poinçonnage (750) hors d'une pièce en tôle (730), et le renfoncement annulaire (740) étant conçu pour rabattre la zone d'extrémité de la partie de tête tubulaire (716) autour de la zone marginale (778) de la pièce en tôle, zone qui se forme après la séparation de la pastille de poinçonnage et qui est enfoncée dans le renfoncement, et pour la transformer ici en un rebord de rivetage (737), **caractérisé en ce que** le talon de poinçon (734) dépasse au-delà de l'extrémité frontale (733) de la matrice (732), extrémité qui se trouve à l'extérieur du renfoncement annulaire.

20. Procédé selon l'une des revendications 11 à 15, dans lequel on utilise une matrice (732) présentant un renfoncement annulaire (740) prévu à une extrémité frontale (733) et ménagé autour d'un talon de poinçon (734) agencé au centre, le talon de poinçon étant conçu pour coopérer avec une partie de tête tubulaire (716) d'un élément fonctionnel (710), afin de séparer une pastille de poinçonnage (750) hors d'une pièce en tôle (730), et le renfoncement annulaire (740) étant conçu pour rabattre la zone d'extrémité de la partie de tête tubulaire (716) autour de la zone marginale (778) de la pièce en tôle, zone qui se forme après la séparation de la pastille de poinçonnage et qui est enfoncée dans le renfoncement, et pour la transformer ici en un rebord de rivetage (737), **caractérisé en ce que** des gorges (739) sont ménagées de préférence à des distances angulaires régulières dans l'extrémité frontale (733) de la matrice (732) autour du renfoncement (740) et prévues de préférence radialement et en oblique par rapport à l'axe longitudinal (724) de la matrice, grâce à quoi des caractéristiques anti-rotation peuvent être réalisées dans la pièce en tôle et dans le matériau voisin de la partie de tête.

21. Procédé selon l'une des revendications 11 à 15 avec un élément fonctionnel (810) comportant une partie de tige (814) présentant des caractéristiques de forme et une partie de tête (816), en particulier un élément fonctionnel selon l'une des revendications 1 à 10, dans lequel on utilise un agencement de poinçon, **caractérisé par**
- un poinçon extérieur (842),
- un poinçon intérieur (848) qui est agencé mobile à l'intérieur d'un canal de poinçon (886) du poinçon extérieur (842) par rapport au poinçon extérieur entre une position de réception pour l'élément fonctionnel (810) et une position de mise en place pour l'élément fonctionnel (810), dans la position de réception l'élément fonctionnel pouvant être introduit de préférence depuis le côté dans le canal de poinçon (886), et dans la position de mise en place la partie de tête (816) de l'élément fonctionnel dépassant hors de l'agencement de poinçon (843), et par
- au moins deux segments (904) portés par le poinçon extérieur et présentant de préférence des caractéristiques de forme sur un côté intérieur (908), qui peuvent venir s'engager dans les caractéristiques de forme de la partie de tige (814) de l'élément fonctionnel et qui peuvent être déplacés entre une position ouverte (figure 18B) éloignée de la partie de tige (814) de l'élément fonctionnel et une position fermée (figure 18C) en engagement avec les caractéristiques de forme de la partie de tige (814).

22. Procédé selon la revendication 21, **caractérisé en ce que** le poinçon extérieur comprend une partie supérieure (894) et une partie inférieure (892) fixée sur la partie supérieure, un renfoncement conique (898) ménagé concentriquement par rapport à l'axe longitudinal (824') de la matrice étant prévu dans la partie inférieure (892), et les segments (904) présentant des surfaces coniques correspondantes (920), **en ce que** les segments sont précontraints vers le haut en direction de la partie supérieure (894) contre celle-ci par des poussoirs respectifs (928) chargés par des ressorts et positionnés de préférence en oblique par rapport à l'axe longitudinal (824') de l'agencement de poinçon, lesdits segments pouvant s'engager, dans cette position, par leurs caractéristiques de forme dans celles (812) de l'élément fonctionnel (810) avancé sous la pression du poinçon intérieur (848), et **en ce qu'**au moyen d'une force de traction exercée sur l'élément fonctionnel et extrayant celui-ci hors du canal de poinçon et hors des segments, les poussoirs (928) peuvent être chassés en retour et se déplacer contre le renfoncement conique (898) de la partie inférieure et ainsi jusque dans la position ouverte pour libérer l'élément fonctionnel.

23. Procédé selon la revendication 22, **caractérisé en ce que** la partie supérieure (894) du poinçon extérieur (842) présente, pour centrer les segments (904), un renfoncement conique (900) qui est également ménagé concentriquement par rapport à l'axe longitudinal (824') de la matrice, et **en ce que** les segments (904) présentent d'autres surfaces coniques (914) qui viennent en engagement avec celui-ci (900) dans la position fermée.
